# EUROPEAN PATENT APPLICATION

(11) **EP 4 632 451 A1**
(43) Date of publication of application: **15.10.2025**
(21) Application number: 24759427.8
(22) Date of filing: 05.01.2024
(51) Int. Cl.: G02B 6/124, G02B 6/122

(54) **OPTICAL WAVEGUIDE DEVICE AND OPTICAL NETWORK**

(30) Priority: 22.02.2023 CN 202310173225
(71) Applicant: Huawei Technologies Co., Ltd., Shenzhen, Guangdong 518129 (CN)
(72) Inventor: REN, Yang, Shenzhen, Guangdong 518129 (CN); TU, Zhengrui, Shenzhen, Guangdong 518129 (CN); WU, Yangbo, Shenzhen, Guangdong 518129 (CN)
(74) Representative: Gill Jennings & Every LLP
(86) International application number: PCT/CN2024/070874
(87) International publication number: WO 2024/174748

(57) **Abstract**

An optical waveguide device and an optical network are provided, and relate to the field of optical communication technologies, to perform dispersion compensation on dispersion generated in transmission of a transmission signal in a fiber. The optical waveguide device includes a first waveguide (201). The first waveguide (201) includes an input end and an output end. A first grating (202) is disposed between the input end and the output end of the first waveguide (201). The first grating (202) includes a plurality of grating combs periodically distributed in an extension direction of the first waveguide (201). A grating parameter of the first grating presents chirp distribution. The grating parameter includes one or more of the following: a periodicity of the grating comb and a size of the grating comb.

## Description

This application claims priority to Chinese Patent Application No. 202310173225.6, filed with China National Intellectual Property Administration on February 22, 2023 and entitled "OPTICAL WAVEGUIDE DEVICE AND OPTICAL NETWORK", which is incorporated herein by reference in its entirety.

### TECHNICAL FIELD

Embodiments of this application relate to the field of optical communication technologies, and in particular, to an optical waveguide device and an optical network.

### BACKGROUND

A radio access network (radio access network, RAN) in a conventional network architecture mainly includes a building baseband unit (building baseband unit, BBU), a radio remote unit (radio remote unit, RRU), and an antenna unit (antenna unit, AU).

Generally, in a 4G network architecture, each office is equipped with a BBU and an RRU that are connected through a coaxial cable, and a transmission signal is sent by the RRU to an AU in a wireless manner. This deployment solution is referred to as a distributed radio access network (distributed radio access network, DRAN). In a 5G scenario, a transmission signal frequency increases, and a bandwidth and a channel quantity also increase greatly. Therefore, a plurality of BBUs are centralized in one centralized office (centralized office, CO), and an RRU is deployed on a remote signal tower. Each BBU in the CO is connected to the RRU through one or more fibers. This deployment solution is referred to as a centralized radio access network (centralized radio access network, CRAN). When the CRAN deployment solution is used, the RRU is not located in the centralized office but is deployed on the remote signal tower. In this case, the RRU and an AU are closer to each other. The RRU and AU may be integrated into a large-scale active antenna unit (active antenna unit, AAU), and deployment costs are effectively reduced through the centrally deployed AAU unit. However, in an optical network, dispersion occurs on a process of transmission of a transmission signal in a fiber, and the dispersion causes waveform distortion and pulse distortion of the transmission signal, affecting quality of the transmission signal. When the CRAN deployment solution is used, a dispersion problem of the fiber is more prominent. Because the BBUs are centralized in the CO, and a transmission distance between the BBU and the AAU unit is long, the transmission signal is transmitted for a long distance in the fiber, and the quality of the transmission signal is severely affected. In addition, a quantity ofBBUs in the CO and a quantity of AAUs may be different, and each BBU may be connected to the AAU through one or more fibers. Therefore, in different scenarios, the CO and the AAU may be connected in a plurality of possible manners. Due to different connection manners, different degrees of dispersion are generated after the transmission signal is transmitted through the fiber, and the quality of the transmission signal is also affected to different degrees.

Therefore, how to perform dispersion compensation on the dispersion generated in transmission of the transmission signal in the fiber becomes a problem to be urgently resolved in the industry.

### SUMMARY

Embodiments of this application provide an optical waveguide device and an optical network, to perform dispersion compensation on dispersion generated in transmission of a transmission signal in a fiber.

According to a first aspect, an optical waveguide device is provided. In terms of structure, the optical waveguide device includes a first waveguide and a first grating. The first waveguide includes an input end and an output end. The first grating is disposed between the input end and the output end of the first waveguide. The first grating includes a plurality of grating combs periodically distributed in an extension direction of the first waveguide. In the extension direction of the first waveguide, a width of the first waveguide presents chirp distribution, and/or a grating parameter of the first grating presents chirp distribution. The grating parameter may include one or more of the following: a periodicity of the grating comb and a size of the grating comb. For example, the size of the grating comb may include a width, a depth (or a height).

The chirp distribution of the grating parameter is described as follows: Chirp means a change of the grating parameter in a light propagation direction (that is, the extension direction of the first waveguide), and may include chirp distribution (gradually increasing or decreasing) of the periodicity of the grating comb, or chirp distribution (gradually increasing or decreasing) of the size of the grating comb. The chirp distribution of the waveguide width is described as follows: The chirp distribution of the waveguide width means a change (gradually increasing or decreasing) of the waveguide width in the extension direction of the waveguide.

Specifically, when a transmission signal is transmitted by using the optical waveguide device, after a transmission signal with a specific wavelength enters the optical waveguide device through the input end of the first waveguide, a wave vector of an input optical mode field of the transmission signal and a wave vector of a reflected optical mode field of the transmission signal meet a phase matching relationship: βin+βout=2π/Λij. Aij means an i^{th} grating parameter (which may be, for example, a periodicity or a size of an i^{th} grating comb) of a j^{th} grating, βin is the wave vector of the input optical mode field of the transmission signal, and βout is the wave vector of the reflected optical mode field of the transmission signal. For example, βin is a wave vector of an optical mode field of a specific wavelength that is input to the input end of the first waveguide in a fundamental mode TE0 mode, and an optical mode field TE0 input to the first waveguide is perturbed by the first grating, resulting in reflection. Because in the extension direction of the first waveguide, the width of the first waveguide presents chirp distribution and/or the grating parameter of the first grating presents chirp distribution, under reflection by a grating structure with an adequate length, reflected light in a high-order mode TE1 mode is generated in the first waveguide. Because a delay response that varies with a wavelength occurs on the reflected light, dispersion is generated. Dispersion compensation may be performed on the transmission signal with the specific wavelength by using the dispersion, and then the transmission signal is output to the output end of the first waveguide. In this way, the optical waveguide device can implement dispersion compensation by using one waveguide. Compared with using a dispersion compensating fiber, in this manner, the optical waveguide device is more flexible in configuration, so that application scenarios of the optical waveguide device are more diversified.

In a possible implementation, in terms of structure, the optical waveguide device further includes a second waveguide. The second waveguide includes a second grating. The second waveguide and the first waveguide have a coupling region. The first grating and the second grating are distributed in the coupling region. The second grating includes a plurality of grating combs periodically distributed in an extension direction of the second waveguide. In the extension direction of the second waveguide, a width of the second waveguide presents chirp distribution, and/or a grating parameter of the second grating presents chirp distribution. The grating parameter may include one or more of the following: a periodicity of the grating comb and a size of the grating comb. The grating parameter of the second grating may be the same as or different from the grating parameter of the first grating.

Specifically, when a transmission signal is transmitted by using the optical waveguide device, a wave vector of an input optical mode field of the transmission signal and a wave vector of a reflected optical mode field of the transmission signal meet a phase matching relationship: βin+βout=2π/Λij. After a transmission signal with a specific wavelength (an optical mode field being in TE0) enters the optical waveguide device through the input end of the first waveguide, the optical mode field TE0 input to the first waveguide is perturbed by the first grating, resulting in reflection. Because in the extension direction of the first waveguide, the width of the first waveguide presents chirp distribution and/or the grating parameter of the first grating presents chirp distribution, under reflection by a grating structure with an adequate length, reflected light in a TE1 mode is generated in the first waveguide. Because a delay response that varies with a wavelength occurs on the reflected light, dispersion is generated. Dispersion compensation may be performed on the transmission signal with the specific wavelength by using the dispersion, and then the transmission signal is output to the output end of the first waveguide. Similarly, after a transmission signal with another specific wavelength (an optical mode field being in TE0) enters the optical waveguide device through the input end of the first waveguide, the optical mode field TE0 input to the first waveguide is perturbed by the second grating, resulting in reflection. Because in the extension direction of the first waveguide, the width of the first waveguide presents chirp distribution and/or the grating parameter of the first grating presents chirp distribution, under reflection by a grating structure with an adequate length, reflected light in a TE1 mode is generated in the first waveguide. Because a delay response that varies with a wavelength occurs on the reflected light, dispersion is generated. Dispersion compensation may be performed on the transmission signal with the specific wavelength by using the dispersion, and then the transmission signal is output to the output end of the first waveguide. Therefore, when transmission signals with two wavelengths are input to the optical waveguide device, the optical waveguide device can perform dispersion compensation on the transmission signals with the two wavelengths by using two gratings disposed at two waveguides.

In another possible implementation, in terms of structure, the optical waveguide device includes the first waveguide, the first grating, and a third grating. The third grating is disposed between the input end and the output end of the first waveguide, and on a cross section perpendicular to the extension direction of the first waveguide, the first grating and the third grating are symmetrically distributed. The third grating includes a plurality of grating combs periodically distributed in the extension direction of the first waveguide. A grating parameter may include one or more of the following: a periodicity of the grating comb and a size of the grating comb. The grating parameter of the third grating is the same as or different from the grating parameter of the first grating.

Therefore, when a transmission signal is transmitted by using the optical waveguide device, a wave vector of an input optical mode field of the transmission signal and a wave vector of a reflected optical mode field of the transmission signal meet a phase matching relationship: βin+βout=2π/Λij. After a transmission signal with a specific wavelength (an optical mode field being in TE0) enters the optical waveguide device through the input end of the first waveguide, the optical mode field TE0 input to the first waveguide is perturbed by the first grating, resulting in reflection. Because in the extension direction of the first waveguide, the width of the first waveguide presents chirp distribution and/or the grating parameter of the first grating presents chirp distribution, under reflection by a grating structure with an adequate length, reflected light in a TE1 mode is generated in the first waveguide. Because a delay response that varies with a wavelength occurs on the reflected light, dispersion is generated. Dispersion compensation may be performed on the transmission signal with the specific wavelength by using the dispersion, and then the transmission signal is output to the output end of the first waveguide. Similarly, after a transmission signal with another specific wavelength (an optical mode field being in TE0) enters the optical waveguide device through the input end of the first waveguide, the optical mode field TE0 input to the first waveguide is perturbed by the third grating, resulting in reflection. Because in the extension direction of the first waveguide, the width of the first waveguide presents chirp distribution and/or the grating parameter of the first grating presents chirp distribution, under reflection by a grating structure with an adequate length, reflected light in a TE1 mode is generated in the first waveguide. Because a delay response that varies with a wavelength occurs on the reflected light, dispersion is generated. Dispersion compensation may be performed on the transmission signal with the specific wavelength by using the dispersion, and then the transmission signal is output to the output end of the first waveguide. Therefore, when transmission signals with two wavelengths are input to the optical waveguide device, the optical waveguide device can perform dispersion compensation on the transmission signals with the two wavelengths by using one waveguide.

In a possible implementation, in terms of structure, the first waveguide and the second waveguide in the optical waveguide device may be further made of a same layer of waveguide material.

In another possible implementation, in terms of structure, the first waveguide and the second waveguide in the optical waveguide device may be further made of different layers of waveguide material.

Because the first waveguide and the second waveguide may be made of the same layer of waveguide material, or may be made of the different layers of waveguide material, specific positions and a relative position relationship of the first waveguide and the second waveguide are set with greater flexibility, and are not limited to a specific manufacturing method and process level. It may be understood that, when the optical waveguide device has a relatively high requirement on an overall device thickness, the first waveguide and the second waveguide may be made of the same layer of waveguide material to reduce the overall thickness. When the optical waveguide device has a relatively high requirement on an overall device area, the first waveguide and the second waveguide may be made of the different layers of waveguide material to reduce an area occupied by the optical waveguide device. In addition, a selection range of material used for manufacturing the first waveguide and the second waveguide is not limited, and generally, in addition to silicon-on-insulator (silicon-on-insulator, SOI), material such as silicon nitride SiN, silicon oxynitride SiON, a planar lightwave circuit (planar lightwave circuit, PLC), bulk lithium niobate, and thin film lithium niobate may alternatively be used for implementing manufacturing of the first waveguide and the second waveguide, so that manufacturing of the optical waveguide device is simpler and more flexible.

In yet another possible implementation, in terms of structure, the optical waveguide device includes the first waveguide, the first grating, and a fourth grating. The first waveguide includes a first waveguide layer and a second waveguide layer that are disposed in a stacked manner. The first grating is disposed at the first waveguide layer. The first waveguide further includes the fourth grating disposed at the second waveguide layer. The fourth grating includes a plurality of grating combs periodically distributed in the extension direction of the first waveguide. The grating parameter may include one or more of the following: a periodicity of the grating comb and a size of the grating comb. The grating parameter of the fourth grating is the same as or different from the grating parameter of the first grating. In a direction perpendicular to the extension direction of the first waveguide and perpendicular to the first waveguide layer, the first grating and the fourth grating are distributed on a same side or different sides of the first waveguide.

Therefore, when a transmission signal is transmitted by using the optical waveguide device, a wave vector of an input optical mode field of the transmission signal and a wave vector of a reflected optical mode field of the transmission signal meet a phase matching relationship: βin+βout=2π/Λij. After a transmission signal with a wavelength (an optical mode field being in TE0) enters the optical waveguide device through the input end of the first waveguide, the optical mode field TE0 input to the first waveguide is perturbed by the first grating, resulting in reflection. Because in the extension direction of the first waveguide, the width of the first waveguide presents chirp distribution and/or the grating parameter of the first grating presents chirp distribution, under reflection by a grating structure with an adequate length, reflected light in a TE1 mode is generated in the first waveguide. Because a delay response that varies with a wavelength occurs on the reflected light, dispersion is generated. Dispersion compensation may be performed on the transmission signal with the specific wavelength by using the dispersion, and then the transmission signal is output to the output end of the first waveguide. Similarly, after a transmission signal with another specific wavelength (an optical mode field being in TE0) enters the optical waveguide device through the input end of the first waveguide, the optical mode field TE0 input to the first waveguide is perturbed by the fourth grating, resulting in reflection. Because in the extension direction of the first waveguide, the width of the first waveguide presents chirp distribution and/or the grating parameter of the first grating presents chirp distribution, under reflection by a grating structure with an adequate length, reflected light in a TE1 mode is generated in the first waveguide. Because a delay response that varies with a wavelength occurs on the reflected light, dispersion is generated. Dispersion compensation may be performed on the transmission signal with the specific wavelength by using the dispersion, and then the transmission signal is output to the output end of the first waveguide. In this way, when transmission signals with two wavelengths are input to the optical waveguide device, the optical waveguide device can perform dispersion compensation on the transmission signals with the two wavelengths by using two gratings disposed at different waveguide layers of a same waveguide.

In another possible implementation, in terms of structure, the optical waveguide device includes the first waveguide, the first grating, and a fifth grating. The first waveguide includes the first waveguide layer and the second waveguide layer that are disposed in the stacked manner. The first grating is disposed at the first waveguide layer. The first waveguide further includes the fifth grating disposed at the first waveguide layer. The fifth grating includes a plurality of grating combs periodically distributed in the extension direction of the first waveguide. A grating parameter of the fifth grating is the same as or different from the grating parameter of the first grating. The grating parameter of the fifth grating may include one or more of the following: a periodicity of the grating comb and a size of the grating comb. In the direction perpendicular to the extension direction of the first waveguide and perpendicular to the first waveguide layer, the first grating and the fifth grating are respectively distributed on two sides of the first waveguide layer.

Therefore, when a transmission signal is transmitted by using the optical waveguide device, a wave vector of an input optical mode field of the transmission signal and a wave vector of a reflected optical mode field of the transmission signal meet a phase matching relationship: βin+βout=2π/Λij. After a transmission signal with a specific wavelength (an optical mode field being in TE0) enters the optical waveguide device through the input end of the first waveguide, the optical mode field TE0 input to the first waveguide is perturbed by the first grating, resulting in reflection. Because in the extension direction of the first waveguide, the width of the first waveguide presents chirp distribution and/or the grating parameter of the first grating presents chirp distribution, under reflection by a grating structure with an adequate length, reflected light in a TE1 mode is generated in the first waveguide. Because a delay response that varies with a wavelength occurs on the reflected light, dispersion is generated. Dispersion compensation may be performed on the transmission signal with the specific wavelength by using the dispersion, and then the transmission signal is output to the output end of the first waveguide. Similarly, after a transmission signal with another specific wavelength (an optical mode field being in TE0) enters the optical waveguide device through the input end of the first waveguide, the optical mode field TE0 input to the first waveguide is perturbed by the fifth grating, resulting in reflection. Because in the extension direction of the first waveguide, the width of the first waveguide presents chirp distribution and/or the grating parameter of the first grating presents chirp distribution, under reflection by a grating structure with an adequate length, reflected light in a TE1 mode is generated in the first waveguide. Because a delay response that varies with a wavelength occurs on the reflected light, dispersion is generated. Dispersion compensation may be performed on the transmission signal with the specific wavelength by using the dispersion, and then the transmission signal is output to the output end of the first waveguide. In this way, the optical waveguide device can perform dispersion compensation on transmission signals with two wavelengths by using two gratings disposed at a same waveguide layer of a same waveguide.

In still another possible implementation, in terms of structure, the optical waveguide device includes the optical waveguide device according to any one of the foregoing aspects, and further includes a first heater electrode. The first heater electrode is disposed beside the first waveguide in the extension direction of the first waveguide, and a distance between the first heater electrode and the first waveguide is constant. The first heater electrode has two ports respectively provided on two ends of the first heater electrode. One port is grounded through a ground end, and the other port is connected to a current input end.

Specifically, based on a phase matching relationship, a transmission signal is input from the input end of the first waveguide, and is reflected after being perturbed by the first grating. Because in the extension direction of the first waveguide, the width of the first waveguide presents chirp distribution and/or the grating parameter of the first grating presents chirp distribution, under reflection by a grating structure with an adequate length, reflected light in a TE1 mode is generated in the first waveguide. Because a delay response that varies with a wavelength occurs on the reflected light, dispersion is generated. The optical waveguide device may perform dispersion compensation on the transmission signal by using the dispersion, and then output the transmission signal to the output end of the first waveguide. When a current input through the current input end is used to heat the first heater electrode, because a thermo-optic effect exists in the waveguide material for manufacturing the first waveguide and the first grating, a refractive index of the waveguide material changes (increases or decreases) with temperature. For example, when the temperature of the first heater electrode increases, the refractive index of the waveguide material decreases as the temperature increases. In this case, a center wavelength of a signal transmitted through the waveguide material decreases, so that the center wavelength reflected by the grating is finally regulated.

In another possible implementation, in terms of structure, the optical waveguide device includes the optical waveguide device according to any one of the foregoing aspects, and may further include a second heater electrode. There is a predetermined included angle between an extension direction of the second heater electrode and the extension direction of the first waveguide. The second heater electrode has two ports respectively provided on two ends of the second heater electrode. One port is grounded through a ground end, and the other port is connected to a current input end.

Specifically, based on a phase matching relationship, a transmission signal is input from the input end of the first waveguide, and is reflected after being perturbed by the first grating. Because in the extension direction of the first waveguide, the width of the first waveguide presents chirp distribution and/or the grating parameter of the first grating presents chirp distribution, under reflection by a grating structure with an adequate length, reflected light in a TE1 mode is generated in the first waveguide. Because a delay response that varies with a wavelength occurs on the reflected light, dispersion is generated. The optical waveguide device may perform dispersion compensation on the transmission signal by using the dispersion, and then output the transmission signal to the output end of the first waveguide. When a current input through the current input end is used to heat the second heater electrode, because there is a predetermined included angle between the extension direction of the second heater electrode and the extension direction of the first waveguide, the temperature of the first waveguide is in approximately linear temperature gradient distribution in its extension direction, to be specific, the temperature of the first waveguide gradually decreases or increases in the extension direction (which depends on the predetermined included angle between the extension directions of the second heater electrode and the first waveguide). The second heater electrode results in a gradient change in the refractive index of the entire waveguide material in the extension direction. This is equivalent to adjustment of a grating parameter. Therefore, regulation of a dispersion degree (which may be represented by a dispersion amount, and is in a unit of ps/nm) of a transmission signal reflected through perturbation of a grating are finally implemented.

In this way, the first heater electrode is disposed in the optical waveguide device to avoid a shift that is of a center wavelength reflected by a grating and that is caused by ambient temperature. The second heater electrode is disposed in the optical waveguide device to adjust a grating parameter to adapt to errors of the grating parameter in different preparation processes. In addition, two heater electrodes (the first heater electrode and the second heater electrode) may alternatively be disposed in one optical waveguide device, to avoid a shift that is of a center wavelength reflected by a grating and that is caused by ambient temperature and regulate a grating parameter to adapt to errors of the grating parameter in different preparation processes.

According to a second aspect, an optical waveguide device is further provided. In terms of structure, the optical waveguide device includes a first waveguide, a second waveguide, and a second grating. The first waveguide includes an input end and an output end. The first waveguide and the second waveguide have a coupling region distributed between the input end and the output end of the first waveguide. The second waveguide includes the second grating distributed in the coupling region. The second grating includes a plurality of grating combs periodically distributed in an extension direction of the second waveguide. In the extension direction of the second waveguide, a width of the second waveguide presents chirp distribution, and/or a grating parameter of the second grating presents chirp distribution. The grating parameter of the second grating may include one or more of the following: a periodicity of the grating comb and a size of the grating comb.

Therefore, when a transmission signal is transmitted by using the optical waveguide device, a wave vector of an input optical mode field of the transmission signal and a wave vector of a reflected optical mode field of the transmission signal meet a phase matching relationship: βin+βout=2π/Λij. After a transmission signal with a specific wavelength (an optical mode field being in TE0) enters the optical waveguide device through the input end of the first waveguide, the optical mode field TE0 input to the first waveguide is perturbed by the second grating, resulting in reflection. Because in an extension direction of the first waveguide 201, a width of the first waveguide presents chirp distribution, and/or a grating parameter of the first grating presents chirp distribution, under reflection by a grating structure with an adequate length, reflected light in a TE1 mode is generated in the first waveguide. Because a delay response that varies with a wavelength occurs on the reflected light, dispersion is generated. Dispersion compensation may be performed on the transmission signal with the specific wavelength by using the dispersion, and then the transmission signal is output to the output end of the first waveguide. In this way, the optical waveguide device implements dispersion compensation on a transmission signal only by using one grating disposed at one of two waveguides.

In still another possible implementation, in terms of structure, the optical waveguide device includes the optical waveguide device according to any one of the foregoing aspects, and further includes a first heater electrode. The first heater electrode is disposed beside the first waveguide in the extension direction of the first waveguide, and a distance between the first heater electrode and the first waveguide is constant.

In another possible implementation, in terms of structure, the optical waveguide device includes the optical waveguide device according to any one of the foregoing aspects, and may further include a second heater electrode. There is a predetermined included angle between an extension direction of the second heater electrode and the extension direction of the first waveguide.

According to a third aspect, an optical network is provided. In terms of structure, the optical network includes a baseband unit BU, a radio unit RU, and a fiber connected between the BU and the RU, and further includes the optical waveguide device according to any one of the foregoing aspects. The optical waveguide device is connected to an optical path between the BU and the RU. The optical waveguide device may alternatively be integrated in an optical module of the BU or the RU, or the optical waveguide device may be further disposed at the fiber.

Therefore, when the optical waveguide device is configured in the optical network, there are a plurality of possible configuration manners. Therefore, the optical waveguide device is configured more flexibly. In addition, deployment manners of an internal unit and a component of the optical network are more diversified, and the optical network is more feasible.

### BRIEF DESCRIPTION OF DRAWINGS

FIG. 1 is a diagram of an optical network according to an embodiment of this application;
FIG. 2 is a diagram of a DRAN deployment solution according to an embodiment of this application;
FIG. 3 is a diagram of a CRAN deployment solution according to an embodiment of this application;
FIG. 4 is a diagram of an optical network according to another embodiment of this application;
FIG. 5 is a diagram of a structure of an optical waveguide device according to an embodiment of this application;
FIG. 6 is a diagram of a structure of chirp distribution of a grating parameter according to an embodiment of this application;
FIG. 7 is a diagram of a structure of chirp distribution of a grating parameter according to another embodiment of this application;
FIG. 8 is a diagram of a structure of chirp distribution of a waveguide width according to another embodiment of this application;
FIG. 9 is a curve diagram of a reflection group delay and a normalized power response according to an embodiment of this application;
FIG. 10 is a diagram of a structure of an optical waveguide device according to another embodiment of this application;
FIG. 11 is a diagram of a structure of an optical waveguide device according to still another embodiment of this application;
FIG. 12 is a diagram of a structure of an optical waveguide device according to yet another embodiment of this application;
FIG. 13 is a diagram of a structure of an optical waveguide device according to another embodiment of this application;
FIG. 14 is a diagram of a structure of an optical waveguide device according to still another embodiment of this application;
FIG. 15 is a diagram of a structure of an optical waveguide device according to yet another embodiment of this application;
FIG. 16 is a diagram of a structure of an optical waveguide device according to another embodiment of this application;
FIG. 17 is a diagram of a structure of an optical waveguide device according to still another embodiment of this application;
FIG. 18 is a diagram of optical mode field distribution in a TE0 mode according to an embodiment of this application;
FIG. 19 is a diagram of optical mode field distribution in a TE1 mode according to an embodiment of this application;
FIG. 20 is a curve diagram of a reflection group delay and a normalized power response according to another embodiment of this application;
FIG. 21 is a diagram of a structure of an optical waveguide device according to another embodiment of this application;
FIG. 22 is a diagram of optical mode field distribution in a TE0 mode according to another embodiment of this application;
FIG. 23 is a diagram of optical mode field distribution in a TE1 mode according to another embodiment of this application;
FIG. 24 is a diagram of optical mode field distribution in a TE2 mode according to an embodiment of this application;
FIG. 25 is a curve diagram of a normalized power response of reflected light according to still another embodiment of this application;
FIG. 26 is a diagram of a structure of an optical waveguide device according to still another embodiment of this application;
FIG. 27 is a curve diagram of a reflection group delay and a normalized power response according to still another embodiment of this application;
FIG. 28 is a diagram of a structure of an optical waveguide device according to yet another embodiment of this application;
FIG. 29 is a curve diagram of a reflection group delay and a normalized power response according to yet another embodiment of this application;
FIG. 30 is a diagram of a structure of an optical waveguide device according to another embodiment of this application;
FIG. 31 is a diagram of a structure of an optical waveguide device according to still another embodiment of this application; and
FIG. 32 is a diagram of a structure of an optical waveguide device according to yet another embodiment of this application.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

Unless otherwise defined, all technical terms used herein have same meanings as those commonly known to a person of ordinary skill in the art. In embodiments of this application, terms such as "first" and "second" do not limit a quantity and a sequence. In embodiments of this application, the term "and/or" describes an association relationship between associated objects, and represents that three relationships may exist. For example, A and/or B may represent the following three cases: Only A exists, both A and B exist, and only B exists. A and B may be singular or plural.

It should be noted that in this application, terms such as "example" or "for example" are used to represent giving an example, an illustration, or a description. Any embodiment or design scheme described as an "example" or "for example" in this application should not be explained as being more preferred or having more advantages than another embodiment or design scheme. To be precise, use of the term such as "example" or "for example" is intended to present a relative concept in a specific manner.

The following describes the technical solutions in embodiments of this application with reference to accompanying drawings.

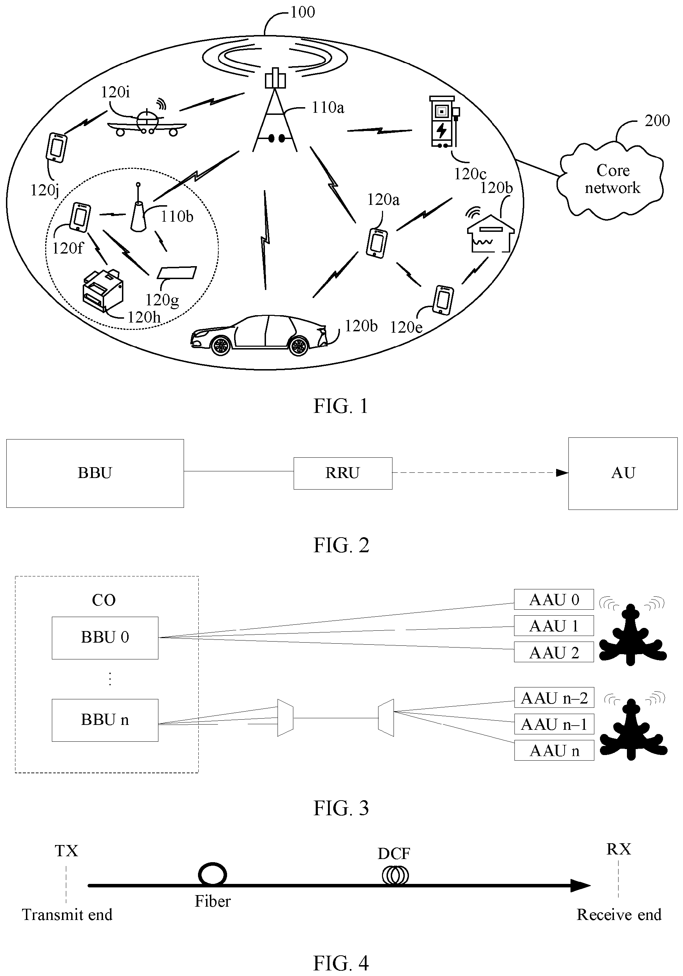

Embodiments of this application may be applied to a diagram of a possible and nonlimiting optical network shown in FIG. 1. Refer to FIG. 1. The optical network includes a radio access network (radio access network, RAN) and a core network (core network, CN). The RAN 100 includes at least one RAN node (for example, 110a and 110b in FIG. 1, collectively referred to as 110) and at least one terminal (for example, 120a to 120j in FIG. 1, collectively referred to as 120). The RAN 100 may further include another RAN node, such as a wireless relay device and/or a wireless backhaul device (not shown in FIG. 1). The terminal 120 is connected to the RAN node 110 in a wireless manner. The RAN node 110 is connected to the core network 200 in a wireless or wired manner. A core network device in the core network 200 and the RAN node 110 in the RAN 100 may be different physical devices, respectively, or may be a same physical device that integrates a logical function of the core network and a logical function of the radio access network.

The terminal may also be referred to as a terminal device, user equipment (user equipment, UE), mobile station, mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, self-driving, telemedicine, a smart grid, smart furniture, a smart office, a smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A device form of the terminal is not limited in embodiments of this application.

The RAN 100 may be a cellular system related to the 3rd generation partnership project (3rd generation partnership project, 3GPP), for example, a 4G or 5G mobile communication system, or a future-oriented evolved system (for example, a 6G mobile communication system). The RAN 100 may alternatively be an open access network (open RAN, O-RAN or ORAN), a cloud radio access network (cloud radio access network, CRAN), or a wireless fidelity (wireless fidelity, Wi-Fi) system. The RAN 100 may alternatively be a communication system that integrates the foregoing two or more systems.

The RAN node 110 may also be sometimes referred to as an access network device, a RAN entity, an access node, or the like, and forms a part of a communication system, to enable the terminal to implement radio access. A plurality of RAN nodes 110 in the communication system may be nodes of a same type, or may be nodes of different types. In some scenarios, roles of the RAN node 110 and the terminal 120 are relative. For example, a network element 120i in FIG. 1 may be a helicopter or an uncrewed aerial vehicle, and may be configured as a mobile base station. For the terminal 120j that accesses the RAN 100 through the network element 120i, the network element 120i is a base station, while for the base station 110a, the network element 120i is a terminal. The RAN node 110 and the terminal 120 are sometimes referred to as communication apparatuses. For example, the network elements 110a and 110b in FIG. 1 may be understood as communication apparatuses having a base station function, and network elements 120a to 120j may be understood as communication apparatuses having a terminal function.

In a possible scenario, the RAN node may be a base station (base station), an evolved base station (evolved NodeB, eNodeB), an access point (access point, AP), a transmission reception point (transmission reception point, TRP), a next generation base station (next generation NodeB, gNB), a next generation base station in a 6th generation (6th generation, 6G) mobile communication system, a base station in a future mobile communication system, an access node in a Wi-Fi system, or the like. The RAN node may be a macro base station (for example, 110a in FIG. 1), a micro base station or an indoor base station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU).

In another possible scenario, a plurality of RAN nodes coordinate to assist the terminal in implementing radio access, and different RAN nodes separately implement some functions of a base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a radio remote unit (remote radio unit, RRU), an active antenna unit (active antenna unit, AAU), or a remote radio head (remote radio head, RRH). The BU may include an indoor baseband unit BBU.

For example, FIG. 2 is a diagram of a RAN node deployment solution. In this architecture, each office is equipped with a BBU and an RRU that are connected through a coaxial cable, and a transmission signal is sent by the RRU to an AU in a wireless manner. This RAN node deployment solution is referred to as a distributed radio access network (distributed radio access network, DRAN). In a conventional 4G network architecture, the DRAN solution is usually used for deployment of a RAN node.

In a 5G scenario, a transmission signal frequency increases, and a bandwidth and a channel quantity also increase greatly. Therefore, a plurality of BBUs are centralized in one centralized office (centralized office, CO), and an RRU is deployed on a remote signal tower. Each BBU in the CO is connected to the RRU through one or more fibers. This RAN deployment solution is referred to as a centralized radio access network (centralized radio access network, CRAN). When the CRAN deployment solution is used, the RRU is not located in the centralized office but is deployed on the remote signal tower. Therefore, in this case, the RRU and an AU are closer to each other. The RRU and AU may be integrated into a large-scale active antenna unit (active antenna unit, AAU), and deployment costs are effectively reduced through the centrally deployed AAU.

For example, FIG. 3 is a diagram of a possible and non-limitative CRAN deployment solution according to an embodiment of this application. Specifically, a plurality of BBUs (a BBU 0 to a BBU n) are centrally deployed in one CO, and an RRU is deployed on a remote signal tower and is very close to an AU (where the RRU and the AU are integrated into an AAU module). Each BBU is connected to the RRU through one or more fibers, in other words, each BBU is connected to the AAU through one or more fibers. For example, refer to FIG. 3. The BBU 0 is connected to an AAU 0, an AAU 1, and an AAU 2 through three fibers, and the BBU n is connected to an AAU n-2, an AAU n-1, and an AAU n in a passive wavelength division multiplexing (wavelength division multiplexing, WDM) manner. In this way, when the BBU is separately connected to the AAU through one fiber, the BBU and the AAU transmit a transmission signal with a single wavelength in the connected fiber. In this case, the fiber may be a single-mode fiber that adapts to the single wavelength. When the BBU is connected to a plurality of AAUs in the passive wavelength division multiplexing manner, the BBU needs to multiplex, to a same fiber for transmission, transmission signals with different wavelengths and that are respectively transmitted to different AAUs. In this case, the fiber may be a multi-mode fiber that adapts to a plurality of wavelengths. Using the CRAN deployment solution has an apparent advantage, to be specific, base station deployment costs are effectively reduced by centralizing infrastructure resources. However, this causes a problem of optical communication between the BBU in the CO and the remote AAU. Generally, in an optical network, after a transmission signal is transmitted for a specific distance in a fiber, dispersion in the fiber causes waveform distortion and pulse distortion of the transmission signal, affecting quality of the transmission signal. When the CRAN deployment solution is used, a dispersion problem of the fiber is more prominent. A transmission distance between the BBU and the AAU is long, the transmission signal is transmitted for a long distance in the fiber, and the quality of the transmission signal is severely affected. For example, when a signal with a high bandwidth of 200 Gbps is transmitted to the remote AAU through a fiber, dispersion causes distortion of the transmission signal at a maximum transmission distance of 10 km. The transmission signal received by the AAU has a high bit error rate, and quality of the transmission signal is severely affected. In addition, with reference to FIG. 3, each BBU in the CO may be connected to the AAU through one or more fibers. In different connection manners, degrees of dispersion generated in transmission of the transmission signal in the fiber are also different. Therefore, the quality of the transmission signal is also affected to different degrees.

Therefore, a solution is urgently needed to perform dispersion compensation on the dispersion generated in a transmission process of the transmission signal to ensure the quality of the transmission signal.

To resolve the foregoing problem, as shown in FIG. 4, currently, a most commonly used dispersion compensation solution is to use a dispersion compensating fiber (dispersion compensating fiber, DCF) to perform dispersion compensation, so that a form of a transmission signal received by a receive end is consistent with a form of a transmission signal sent by a transmit end, thereby ensuring quality of the transmission signal. Specifically, the dispersion compensating fiber is a fiber with a larger dispersion amount, and a dispersion symbol of the dispersion compensating fiber is opposite to that of a normal transmission fiber (where a ratio of the dispersion amount of the dispersion compensating fiber to a dispersion amount of a compensated fiber is generally 1:100). For example, for dispersion generated in transmission of a signal in a single-mode fiber with 10 km, the dispersion generated in fiber transmission may be cancelled by deploying a dispersion compensating fiber with 100 m. When the dispersion compensating fiber solution is used to perform dispersion compensation on the transmission signal, generally, a length of the dispersion compensating fiber needs to be configured before delivery based on different transmission distances of the transmission signal in the fiber, and the dispersion compensating fiber is connected to the fiber for normal transmission to perform dispersion compensation on the transmission signal. Therefore, this solution has poor flexibility, and the dispersion compensating fiber is expensive and cannot be deployed on a large scale in practice. In addition, the dispersion compensating fiber is a single-mode fiber. Therefore, the dispersion compensating fiber can perform dispersion compensation only on dispersion generated in the single-mode fiber.

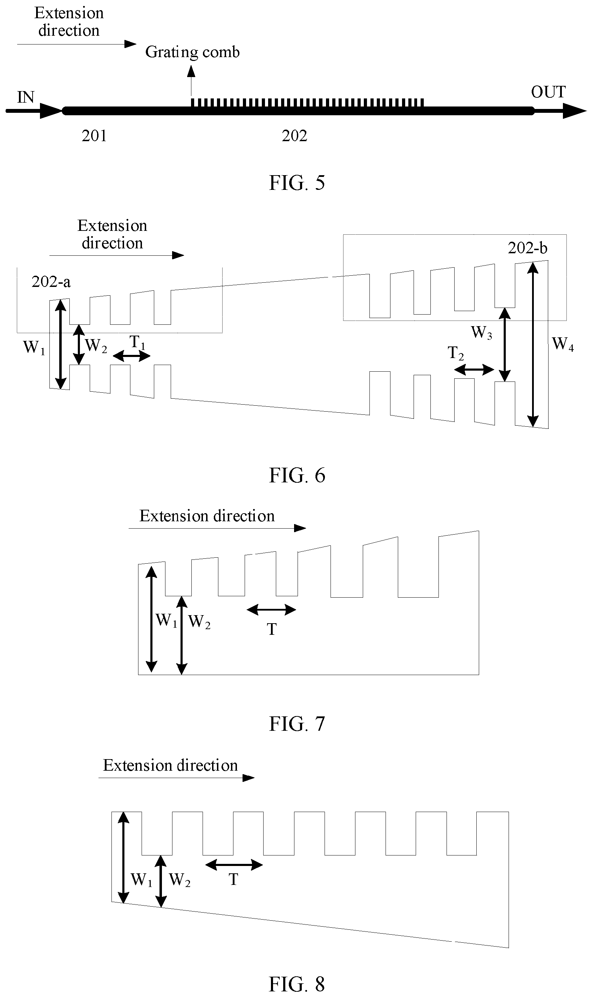

With reference to the foregoing problems in conventional technologies, FIG. 5 is a diagram of a structure of an optical waveguide device according to an embodiment of this application. In terms of structure, the optical waveguide device includes a first waveguide 201 (including an input end IN and an output end OUT) and a first grating 202. The first grating 202 includes a plurality of grating combs periodically distributed in an extension direction of the first waveguide. In the extension direction of the first waveguide 201, a width of the first waveguide 201 presents chirp distribution, and/or a grating parameter of the first grating 202 presents chirp distribution. The grating parameter of the first grating 202 may include one or more of the following: a periodicity of a first grating comb and a size of the first grating comb. The size of the grating comb may include a width and a depth (or a height) of the grating comb.

Refer to FIG. 6. The chirp distribution of the grating parameter is described as follows: The chirp distribution of the grating parameter means a change of the grating parameter in a light propagation direction (that is, the extension direction of the first waveguide), and may include chirp distribution (gradually increasing or decreasing) of the periodicity of the grating comb, or chirp distribution (gradually increasing or decreasing) of the size of the grating comb (that is, the height or the width of the grating comb). Refer to FIG. 6. W1, W2, W3, and W4 respectively represent widths of corresponding positions on the first waveguide. The width of W1 is greater than the width of W2. Two grating combs are distributed on two sides of the first waveguide at W1, and when heights of the two grating combs are the same, the height of the grating comb is (W1-W2)/2. It should be understood that FIG. 6 is described by using an example in which gratings are distributed on both sides of the first waveguide in the extension direction. In another possible grating structure, grating combs may be distributed only on one side of the first waveguide, and a periodicity T of the grating combs represents a size between two adjacent grating combs. In FIG. 6, two periodicities T1 and T2 of grating combs are separately marked. With reference to FIG. 6, it is not difficult to understand that chirp of the waveguide width may also be implemented by chirping the grating parameter.

Refer to FIG. 8. The chirp distribution of the waveguide width is described as follows: The chirp distribution of the waveguide width means a change (gradually increasing or decreasing) of the waveguide width in the extension direction of the waveguide. Refer to FIG. 8. The waveguide width is W2. In the extension direction of the first waveguide, the width of the first waveguide gradually increases (or may certainly gradually decrease). In this case, in the extension direction of the first waveguide, the width of the first waveguide presents chirp distribution.

For example, refer to FIG. 7. Chirp distribution may alternatively be performed only on the grating parameter, and chirp distribution is not performed on the waveguide width in the extension direction of the waveguide. Specifically, as shown in FIG. 7, in the extension direction of the first waveguide, a width of each position of the first waveguide is W2, a height of a 1^{st} grating comb on a left side in the figure is W1-W2, in the extension direction of the first waveguide, the height of the grating comb gradually increases (or may certainly gradually decrease), and the periodicity T of the grating may be constant, may gradually increase, or may gradually decrease. Alternatively, refer to FIG. 8. Chirp distribution is performed only on the waveguide width in the extension direction of the waveguide, and chirp distribution is not performed on the grating parameter. Specifically, as shown in FIG. 8, in the extension direction of the first waveguide, the width of the first waveguide gradually increases, a height of a 1^{st} grating comb on a left side in the figure is W1-W2, and in the extension direction of the first waveguide, the size of the grating comb and the periodicity T of the grating are constant. Certainly, in some examples, a plurality of groups of first gratings may be disposed at the first waveguide in the extension direction of the first waveguide. In some examples, grating parameters of different groups of first gratings may be the same or different. For example, in the first waveguide shown in FIG. 6, one group of first gratings 202-a is disposed at a left side, and another group of first gratings 202-b is disposed at a right side.

Specifically, when a transmission signal is transmitted by using the optical waveguide device, after a transmission signal with a specific wavelength λ1 enters the optical waveguide device through the input end IN, a wave vector of an input optical mode field of the transmission signal and a wave vector of a reflected optical mode field of the transmission signal meet a phase matching relationship: βin+βout=2π/Λij. Aij means an i^{th} grating parameter (which may be, for example, a periodicity or a size of an i^{th} grating comb) of a j^{th} grating, βin is the wave vector of the input optical mode field of the transmission signal, and βout is the wave vector of the reflected optical mode field of the transmission signal. For example, with reference to FIG. 5, if βin is a wave vector of an optical mode field with a wavelength of λ1 that is input to the input end IN of the first waveguide 201 in a fundamental mode TE0 mode, the optical mode field TE0 input to the first waveguide 201 is perturbed by the first grating, resulting in reflection. Because in the extension direction of the first waveguide 201, the width of the first waveguide 201 presents chirp distribution, and/or the grating parameter of the first grating 202 presents chirp distribution, a grating structure with an adequate length, reflected light in a high-order mode TE1 mode is generated in the first waveguide 201. Because a delay response that varies with a wavelength occurs on the reflected light, dispersion is generated. Dispersion compensation may be performed on the transmission signal with the wavelength λ1 by using the dispersion, and then the transmission signal is output to the output end OUT of the first waveguide 201. In this way, the optical waveguide device can implement dispersion compensation by using one waveguide. Compared with using a dispersion compensating fiber, in this manner, the optical waveguide device is more flexible in configuration, so that application scenarios of the optical waveguide device are more diversified.

In addition, compared with a case in which dispersion compensation is performed by using a dispersion compensating fiber, in this case, a grating structure is manufactured on an optical waveguide to form the optical waveguide device, and a dispersion compensation amount of the optical waveguide device is irrelevant to a length of the optical waveguide. Therefore, a volume of the optical waveguide device is smaller than that of the dispersion compensating fiber. This also facilitates reducing of an insertion loss of the transmission signal.

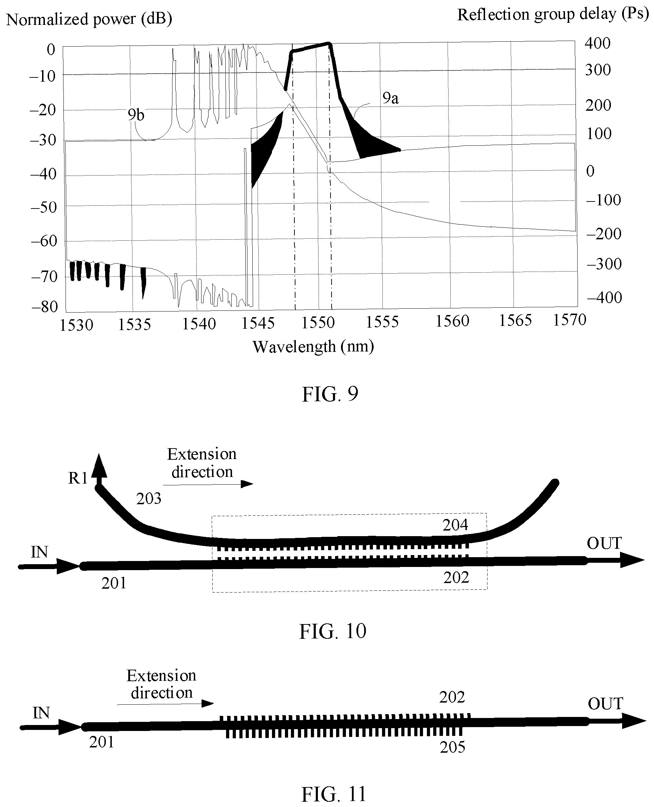

For example, based on the structure of the optical waveguide device shown in FIG. 5, FIG. 9 is a curve diagram of a reflection group delay and a normalized power response of reflected light when the grating parameter of the first grating 202 presents chirp distribution. A horizontal coordinate of the curve diagram is a wavelength (unit: nm), a left vertical coordinate is a normalized power (normalized power, unit: dB), and a right vertical coordinate is a reflection group delay (reflection group delay, unit: Ps). A black curve (marked as 9a in FIG. 9) is a distribution curve of normalized powers of the reflected light, and a white curve (marked as 9b in FIG. 9) is a distribution curve of reflection group delays of the reflected light. Specifically, when the grating parameter of the first grating 202 is chirped, to cause the grating parameter of the first grating 202 to present chirp distribution, a delay response that varies with a wavelength occurs on the reflected light, causing dispersion. It is not difficult to learn that, when the grating parameter of the first grating 202 presents chirp distribution, the first waveguide 201 outputs a signal whose center wavelength is around 1550 nm, and generates a reflection window with a specific bandwidth (where in FIG. 9, the bandwidth of the reflection window is 3 nm (1548 nm-1551 nm)). Dispersion generated in the reflection window may be obtained through calculation by using a slope of a group delay. For example, in the reflection window with the bandwidth of 3 nm in FIG. 9 (where at a left end point of the reflection window (that is, at a wavelength of 1548 nm), a corresponding reflection group delay is 210 Ps), the slope of the group delay obtained through calculation is -70, that is, dispersion of -70 ps/nm is generated in the reflection window. In addition, due to a high group refractive index characteristic at an edge part of the bandwidth of the reflection window, a slow light effect is achieved. To be specific, for a wavelength at an edge part of the bandwidth of the reflection window, an increase of a group refractive index results in a slower equivalent propagation speed of light. In the field of high-speed devices such as modulators, a higher group refractive index of light facilitates speed matching between an optical signal and a high-speed electrical signal, thereby maximizing modulation efficiency and improving a modulator bandwidth.

Based on the architecture shown in FIG. 5. FIG. 10 is a diagram of a structure of an optical waveguide device according to an embodiment of this application. In terms of structure, the optical waveguide device includes a first waveguide 201, a first grating 202, a second waveguide 203, and a second grating 204. The second waveguide 203 and the first waveguide 201 have a coupling region (marked as a dashed-line region in FIG. 10). The second waveguide 203 and the first waveguide 201 are close enough in the coupling region (where for example, a distance between the second waveguide 203 and the first waveguide 201 in the coupling region is 100 nm to 2000 nm). The first grating 202 and the second grating 204 are distributed in the coupling region. The second grating 204 includes a plurality of grating combs periodically distributed in an extension direction of the second waveguide. In the extension direction of the second waveguide 203, a width of the second waveguide 203 presents chirp distribution, and/or a grating parameter of the second grating 204 presents chirp distribution. A grating parameter of the first grating 202 is the same as or different from the grating parameter of the second grating 204. In this embodiment of this application, an example in which the grating parameter of the first grating is different from the grating parameter of the second grating is used for description, and the grating parameters of the two gratings should not be limited thereto.

Specifically, when a transmission signal is transmitted by using the optical waveguide device, a wave vector of an input optical mode field of the transmission signal and a wave vector of a reflected optical mode field of the transmission signal meet a phase matching relationship: βin+βout=2π/Λij. After a transmission signal with a wavelength λ1 (an optical mode field being in TE0) enters the optical waveguide device through an input end IN, the optical mode field TE0 input to the first waveguide 201 is perturbed by the first grating, resulting in reflection. Because in an extension direction of the first waveguide 201, a width of the first waveguide 201 presents chirp distribution, and/or the grating parameter of the first grating 202 presents chirp distribution, under reflection by a grating structure with an adequate length, reflected light in a TE1 mode is generated in the first waveguide 201. Because a delay response that varies with a wavelength occurs on the reflected light, dispersion is generated. Dispersion compensation may be performed on the transmission signal with the wavelength λ1 by using the dispersion, and then the transmission signal is output to an output end OUT of the first waveguide 201. Similarly, after a transmission signal with a wavelength λ2 (an optical mode field being in TE0) enters the optical waveguide device through the input end IN, the optical mode field TE0 input to the first waveguide 201 is perturbed by the second grating, resulting in reflection. Because in the extension direction of the first waveguide 201, the width of the first waveguide 201 presents chirp distribution and/or the grating parameter of the first grating 202 presents chirp distribution, under reflection by a grating structure with an adequate length, reflected light in a TE1 mode is generated in the first waveguide 201. Because a delay response that varies with a wavelength occurs on the reflected light, dispersion is generated. Dispersion compensation may be performed on the transmission signal with the wavelength λ2 by using the dispersion, and then the transmission signal is output to the output end of the first waveguide 201. Therefore, when the transmission signals with the two wavelengths (λ1 and λ2) are input to the optical waveguide device, the optical waveguide device can perform dispersion compensation on the transmission signals with the two wavelengths by using two gratings disposed at two waveguides. In addition, because the transmission signal with the wavelength λ1 and the transmission signal with the wavelength λ2 are output after passing through a same transmission distance in the first waveguide, the optical waveguide device not only reduces insertion losses of transmission signals with various wavelengths, but also facilitates balancing of losses of the transmission signals with various wavelengths.

In addition, the optical waveguide device provided in this embodiment of this application further has a wavelength division function. Refer to FIG. 10. The second waveguide 203 includes an output end R1. For example, the output end R1 may be located on a same side as the input end IN of the first waveguide 201. As described above, when the transmission signal with the wavelength of λ2 is reflected back to the first waveguide by the second grating 204 of the second waveguide 203, the transmission signal may be further output from the output end R1 of the second waveguide 203, so that the transmission signal with the wavelength of λ2 is output in a wavelength division manner. Therefore, the optical waveguide device shown in FIG. 10 herein may enable the two transmission signals with the different wavelengths (λ1 and λ2) to be output from the output end of the first waveguide 201, and may further enable the transmission signal with the wavelength of λ2 to be output from the output end of the second waveguide 203, to implement a wavelength division function.

Based on the architecture shown in FIG. 5. FIG. 11 is a diagram of a structure of an optical waveguide device according to an embodiment of this application. In terms of structure, the optical waveguide device includes a first waveguide 201, a first grating 202, and a third grating 205. The third grating 205 is disposed between an input end and an output end of the first waveguide, and on a cross section perpendicular to an extension direction of the first waveguide 201, the first grating 202 and the third grating 205 are symmetrically distributed. The third grating 205 includes a plurality of grating combs periodically distributed in the extension direction of the first waveguide. A grating parameter of the third grating 205 is the same as or different from a grating parameter of the first grating 202. The grating parameter of the third grating 205 may include one or more of the following: a periodicity of a third grating comb and a size of the third grating comb.

Therefore, when a transmission signal is transmitted by using the optical waveguide device, a wave vector of an input optical mode field of the transmission signal and a wave vector of a reflected optical mode field of the transmission signal meet a phase matching relationship: βin+βout=2π/Λij. After a transmission signal with a wavelength λ1 (an optical mode field being in TE0) enters the optical waveguide device through the input end IN, the optical mode field TE0 input to the first waveguide 201 is perturbed by the first grating, resulting in reflection. Because in the extension direction of the first waveguide 201, a width of the first waveguide 201 presents chirp distribution, and/or the grating parameter of the first grating 202 presents chirp distribution, a grating structure with an adequate length, reflected light in a TE1 mode is generated in the first waveguide 201. Because a delay response that varies with a wavelength occurs on the reflected light, dispersion is generated. Dispersion compensation may be performed on the transmission signal with the wavelength λ1 by using the dispersion, and then the transmission signal is output to the output end OUT of the first waveguide 201. Similarly, after a transmission signal with a wavelength λ2 (an optical mode field being in TE0) enters the optical waveguide device through the input end IN, the optical mode field TE0 input to the first waveguide 201 is perturbed by the third grating, resulting in reflection. Because in the extension direction of the first waveguide 201, the width of the first waveguide 201 presents chirp distribution, and/or the grating parameter of the first grating 202 presents chirp distribution, under reflection by a grating structure with an adequate length, reflected light in a TE1 mode is generated in the first waveguide 201. Because a delay response that varies with a wavelength occurs on the reflected light, dispersion is generated. Dispersion compensation may be performed on the transmission signal with the wavelength λ2 by using the dispersion, and then the transmission signal is output to the output end OUT of the first waveguide 201. Therefore, when the transmission signals with the two wavelengths (λ1 and λ2) are input to the optical waveguide device, the optical waveguide device can perform dispersion compensation on the transmission signals with the two wavelengths by using one waveguide.

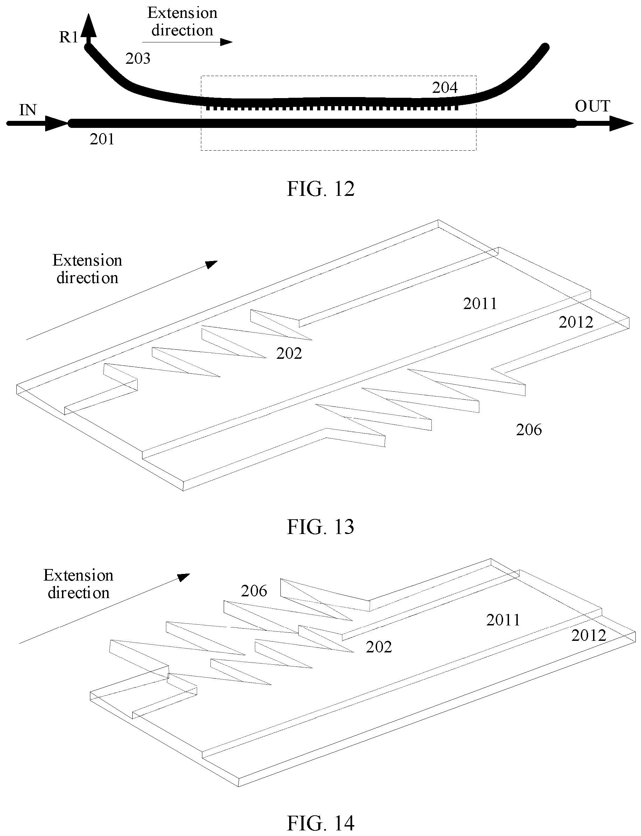

Based on the architecture shown in FIG. 5. FIG. 12 is a diagram of a structure of an optical waveguide device according to an embodiment of this application. In terms of structure, the optical waveguide device includes a first waveguide 201, a second waveguide 203, and a second grating 204. The first waveguide 201 and the second waveguide 203 have a coupling region (marked as a dashed-line box region in FIG. 12) distributed between an input end IN and an output end OUT of the first waveguide 201. The second waveguide 203 includes the second grating 204 distributed in the coupling region. The second grating 204 includes a plurality of grating combs periodically distributed in an extension direction of the second waveguide. A grating parameter of the second grating presents chirp distribution. The grating parameter of the second grating may include one or more of the following: a periodicity of a second grating comb and a size of the second grating comb.

Therefore, when a transmission signal is transmitted by using the optical waveguide device, a wave vector of an input optical mode field of the transmission signal and a wave vector of a reflected optical mode field of the transmission signal meet a phase matching relationship: βin+βout=2π/Λij. After a transmission signal with a wavelength λ1 (an optical mode field being in TE0) enters the optical waveguide device through the input end IN, the optical mode field TE0 input to the first waveguide 201 is perturbed by the second grating, resulting in reflection. Because in an extension direction of the first waveguide 201, a width of the first waveguide 201 presents chirp distribution, and/or a grating parameter of a first grating 202 presents chirp distribution, under reflection by a grating structure with an adequate length, reflected light in a TE1 mode is generated in the first waveguide 201. Because a delay response that varies with a wavelength occurs on the reflected light, dispersion is generated. Dispersion compensation may be performed on the transmission signal with the wavelength λ1 by using the dispersion, and then the transmission signal is output to the output end OUT of the first waveguide 201. In this way, the optical waveguide device implements dispersion compensation on the transmission signal only by using one grating disposed at one of the two waveguides.

It should be noted that the first waveguide and the second waveguide mentioned in this embodiment of this application may be made of a same layer of waveguide material, or may be made of different layers of waveguide material. A manufacturing method and a process level should not limit specific positions and a relative position relationship of the first waveguide and the second waveguide. In addition, material used for manufacturing the first waveguide and the second waveguide should not constitute a limitation on this embodiment of this application. Generally, in addition to silicon-on-insulator (silicon-on-insulator, SOI), material such as silicon nitride SiN, silicon oxynitride SiON, a planar lightwave circuit (planar lightwave circuit, PLC), bulk lithium niobate, and thin film lithium niobate may also be used for implementing this embodiment of this application.

In some examples, in this embodiment of this application, one or more gratings can be separately disposed at a multi-layer structure of a same waveguide, to simultaneously perform dispersion compensation on signals with a plurality of wavelengths.

Specifically, based on the architecture shown in FIG. 5, with reference to FIG. 13 and FIG. 14, an embodiment of this application provides an optical waveguide device. In terms of structure, the optical waveguide device includes a first waveguide 201, a first grating 202, and a fourth grating 206. The first waveguide 201 includes a first waveguide layer 2011 and a second waveguide layer 2012 that are disposed in a stacked manner. The first grating 202 is disposed at the first waveguide layer 2011. The first waveguide 201 further includes the fourth grating 206 disposed at the second waveguide layer 2012. The fourth grating 206 includes a plurality of grating combs periodically distributed in an extension direction of the first waveguide. A grating parameter of the fourth grating 206 presents chirp distribution. The grating parameter of the fourth grating may include one or more of the following: a periodicity of a fourth grating comb and a size of the fourth grating comb. The grating parameter of the fourth grating 206 is the same as or different from a grating parameter of the first grating 202. In a direction perpendicular to the extension direction of the first waveguide and perpendicular to the first waveguide layer 2011, the first grating 202 and the fourth grating 206 are distributed on a same side (as shown in FIG. 14) or different sides (as shown in FIG. 13) of the first waveguide 201. An example in which the first grating 202 and the fourth grating 206 are distributed on the same side of the first waveguide 201, and the grating parameter of the first grating 202 is different from the grating parameter of the fourth grating 206 is used for description.

Therefore, when a transmission signal is transmitted by using the optical waveguide device, a wave vector of an input optical mode field of the transmission signal and a wave vector of a reflected optical mode field of the transmission signal meet a phase matching relationship: βin+βout=2π/Λij. After a transmission signal with a wavelength λ1 (an optical mode field being in TE0) enters the optical waveguide device through an input end IN, the optical mode field TE0 input to the first waveguide 201 is perturbed by the first grating, resulting in reflection. Because in the extension direction of the first waveguide 201, a width of the first waveguide 201 presents chirp distribution, and/or the grating parameter of the first grating 202 presents chirp distribution, a grating structure with an adequate length, reflected light in a TE1 mode is generated in the first waveguide 201. Because a delay response that varies with a wavelength occurs on the reflected light, dispersion is generated. Dispersion compensation may be performed on the transmission signal with the wavelength λ1 by using the dispersion, and then the transmission signal is output to an output end OUT of the first waveguide 201. Similarly, after a transmission signal with a wavelength λ2 (an optical mode field being in TE0) enters the optical waveguide device through the input end IN, the optical mode field TE0 input to the first waveguide 201 is perturbed by the fourth grating, resulting in reflection. Because in the extension direction of the first waveguide 201, the width of the first waveguide 201 presents chirp distribution, and/or the grating parameter of the first grating 202 presents chirp distribution, under reflection by a grating structure with an adequate length, reflected light in a TE1 mode is generated in the first waveguide 201. Because a delay response that varies with a wavelength occurs on the reflected light, dispersion is generated. Dispersion compensation may be performed on the transmission signal with the wavelength λ2 by using the dispersion, and then the transmission signal is output to the output end OUT of the first waveguide 201. In this way, when the transmission signals with the two wavelengths (λ1 and λ2) are input to the optical waveguide device, the optical waveguide device can perform dispersion compensation on the transmission signals with the two wavelengths by using two gratings disposed at different waveguide layers of a same waveguide.

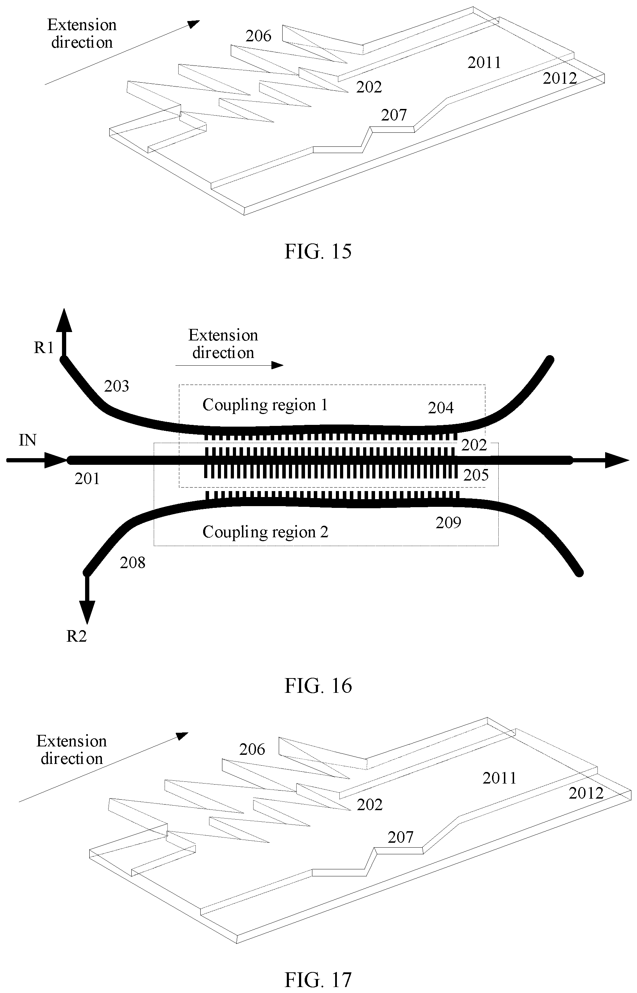

Based on the structure of the optical waveguide device shown in FIG. 14, FIG. 15 is a diagram of a structure of an optical waveguide device according to an embodiment of this application. In terms of structure, the optical waveguide device further includes a fifth grating 207. The fifth grating 207 is disposed at a first waveguide layer 2011 of a first waveguide 201. The fifth grating 207 includes a plurality of grating combs periodically distributed in an extension direction of the first waveguide. A grating parameter of the fifth grating 207 presents chirp distribution. The grating parameter of the fifth grating may include one or more of the following: a periodicity of a fifth grating comb and a size of the fifth grating comb. In a direction perpendicular to the extension direction of the first waveguide and perpendicular to the first waveguide layer, a first grating 202 and the fifth grating 207 are distributed on two sides of the first waveguide layer. For example, an example in which the grating parameter of the fifth grating is different from a grating parameter of the first grating is used for description herein.

Therefore, after a transmission signal with a wavelength λ3 (an optical mode field being in TE0) enters the optical waveguide device through an input end IN, the optical mode field TE0 input to the first waveguide 201 is perturbed by the fifth grating, resulting in reflection. Because in the extension direction of the first waveguide 201, a width of the first waveguide 201 presents chirp distribution, and/or the grating parameter of the first grating 202 presents chirp distribution, under reflection by a grating structure with an adequate length, reflected light in a TE1 mode is generated in the first waveguide 201. Because a delay response that varies with a wavelength occurs on the reflected light, dispersion is generated. Dispersion compensation may be performed on the transmission signal with the wavelength λ3 by using the dispersion, and then the transmission signal is output to an output end OUT of the first waveguide 201. In this way, the optical waveguide device can perform dispersion compensation on transmission signals with two wavelengths (λ1 and λ3) by using two gratings (that is, the first grating and the fifth grating) disposed at a same waveguide layer of a same waveguide. In addition, with reference to FIG. 14 and FIG. 15, when transmission signals with three wavelengths (λ1, λ2, and λ3) are input to the optical waveguide device, the optical waveguide device can perform dispersion compensation on the transmission signals with the three wavelengths by using three gratings (that is, the first grating, a fourth grating, and the fifth grating) in a same waveguide. With reference to FIG. 14, a process in which the transmission signals with the wavelengths λ1 and λ2 are input to the optical waveguide device through the input end IN, and the optical waveguide device performs dispersion compensation on the signals with the two wavelengths (λ1 and λ2) is described above, and details are not described herein again.

For example, with reference to FIG. 16, an embodiment of this application provides an optical waveguide device. In terms of structure, the optical waveguide device includes a first waveguide 201, a first grating 202, a second waveguide 203, a second grating 204, a third grating 205, a third waveguide 208 (including at least one output end, marked as R2 in FIG. 16), and a sixth grating 209. The second waveguide 203 and the first waveguide 201 are close enough to generate a coupling region (marked as a coupling region 1 corresponding to a dashed-line box in FIG. 16). The third waveguide 208 and the first waveguide 201 are close enough to generate a coupling region (marked as a coupling region 2 corresponding to a dashed-line box in FIG. 16). The third waveguide 208 includes the sixth grating 209 distributed in the coupling region 2. The sixth grating 209 includes a plurality of grating combs periodically distributed in an extension direction of the third waveguide. In the extension direction of the third waveguide 208, a width of the third waveguide 208 presents chirp distribution, and/or a grating parameter of the sixth grating presents chirp distribution. The grating parameter of the sixth grating may include one or more of the following: a periodicity of a sixth grating comb and a size of the sixth grating comb.

Therefore, when a transmission signal is transmitted by using the optical waveguide device, a wave vector of an input optical mode field of the transmission signal and a wave vector of a reflected optical mode field of the transmission signal meet a phase matching relationship: βin+βout=2π/Λij. After a transmission signal with a wavelength λ1 (an optical mode field being in TE0) enters the optical waveguide device through an input end IN, the optical mode field TE0 input to the first waveguide 201 is perturbed by the first grating, resulting in reflection. Because in an extension direction of the first waveguide 201, a width of the first waveguide 201 presents chirp distribution, and/or a grating parameter of the first grating 202 presents chirp distribution, under reflection by a grating structure with an adequate length, reflected light in a TE1 mode is generated in the first waveguide 201. Because a delay response that varies with a wavelength occurs on the reflected light, dispersion is generated. Dispersion compensation may be performed on the transmission signal with the wavelength λ1 by using the dispersion, and then the transmission signal is output to an output end OUT of the first waveguide 201. Similarly, after a transmission signal with a wavelength λ2 (an optical mode field being in TE0) enters the optical waveguide device through the input end IN, the optical mode field TE0 input to the first waveguide 201 is perturbed by the second grating, resulting in reflection. Because in the extension direction of the first waveguide 201, the width of the first waveguide 201 presents chirp distribution, and/or the grating parameter of the first grating 202 presents chirp distribution, under reflection by a grating structure with an adequate length, reflected light in a TE1 mode is generated in the first waveguide 201. Because a delay response that varies with a wavelength occurs on the reflected light, dispersion is generated. Dispersion compensation may be performed on the transmission signal with the wavelength λ2 by using the dispersion, and then the transmission signal is output to the output end OUT of the first waveguide 201. After a transmission signal with a wavelength λ3 (an optical mode field being in TE0) enters the optical waveguide device through the input end IN, the optical mode field TE0 input to the first waveguide 201 is perturbed by the third grating, resulting in reflection. Because in the extension direction of the first waveguide 201, the width of the first waveguide 201 presents chirp distribution, and/or the grating parameter of the first grating 202 presents chirp distribution, after the optical mode field TE0 is reflected by a grating structure with an adequate length, reflected light in a TE1 mode is generated in the first waveguide 201. Because a delay response that varies with a wavelength occurs on the reflected light, dispersion is generated. Dispersion compensation may be performed on the transmission signal with the wavelength λ3 by using the dispersion, and then the transmission signal is output to the output end OUT of the first waveguide 201. After a transmission signal with a wavelength λ4 (an optical mode field being in TE0) enters the optical waveguide device through the input end IN, the optical mode field TE0 input to the first waveguide 201 is perturbed by the sixth grating, resulting in reflection. Because in the extension direction of the first waveguide 201, the width of the first waveguide 201 presents chirp distribution, and/or the grating parameter of the first grating 202 presents chirp distribution, after the optical mode field TE0 is reflected by a grating structure with an adequate length, reflected light in a TE1 mode is generated in the first waveguide 201. Because a delay response that varies with a wavelength occurs on the reflected light, dispersion is generated. Dispersion compensation may be performed on the transmission signal with the wavelength λ4 by using the dispersion, and then the transmission signal is output to the output end OUT of the first waveguide 201. In this way, when the transmission signals with the four wavelengths (λ1, λ2, λ3, and λ4) are input to the optical waveguide device, the optical waveguide device can perform dispersion compensation on the transmission signals with the four wavelengths.

For example, based on the optical waveguide devices in FIG. 15 and FIG. 16, four different gratings may be disposed at different sides of different waveguide layers (the first waveguide layer and the second waveguide layer), so that dispersion compensation is performed on transmission signals with four wavelengths by using one waveguide, as shown in FIG. 17. In terms of structure, the optical waveguide device includes a first waveguide 201 (where the first waveguide 201 includes a first waveguide layer 2011 and a second waveguide layer 2012 that are disposed in a stacked manner), a first grating 202, a fourth grating 206, a fifth grating 207, and a sixth grating 209. The first grating 202 and the fifth grating 207 are disposed at two sides of the first waveguide layer 2011. The fourth grating 206 and the sixth grating 209 are disposed at two sides of the second waveguide layer 2012. It should be noted that, the first grating 202 and the fourth grating 206 may be disposed at a same side or different sides of the first waveguide 201, and the fifth grating 207 and the sixth grating 209 may be disposed at a same side or different sides of the first waveguide 201. For ease of description, an example in which the first grating 202 and the fourth grating 206 are disposed at different waveguide layers and distributed on a same side of the first waveguide 201, and the fifth grating 207 and the sixth grating 209 are disposed at different waveguide layers and distributed on a same side of the first waveguide 201 is used herein, and specific arrangement positions of the four gratings should not be limited thereto. It should be understood that a total of four gratings are distributed in the optical waveguide device, and grating parameters of the four gratings are different from each other.

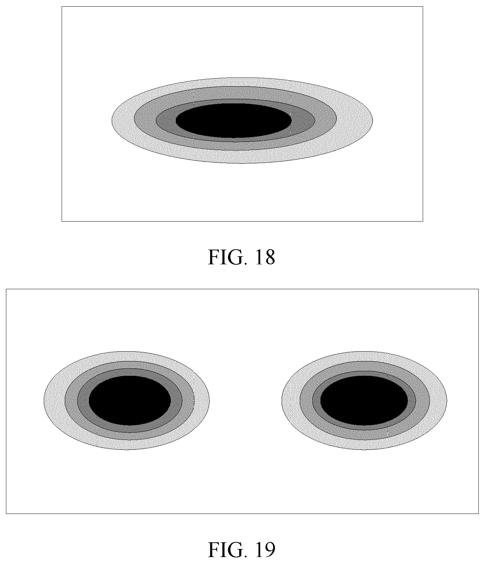

Therefore, when a transmission signal is transmitted by using the optical waveguide device, a wave vector of an input optical mode field of the transmission signal and a wave vector of a reflected optical mode field of the transmission signal meet a phase matching relationship: βin+βout=2π/Λij. After a transmission signal with a wavelength λ1 (where an input optical mode field of the transmission signal is in TE0, and reference may be made to a spot pattern of TE0 provided in FIG. 18) enters the optical waveguide device through an input end IN, the optical mode field TE0 input to the first waveguide 201 is perturbed by the first grating, resulting in reflection. Because in an extension direction of the first waveguide 201, a width of the first waveguide 201 presents chirp distribution, and/or the grating parameter of the first grating 202 presents chirp distribution, under reflection by a grating structure with an adequate length, reflected light in a TE1 mode (where reference may be made to a spot pattern of the TE1 mode provided in FIG. 19) is generated in the first waveguide 201. Because a delay response that varies with a wavelength occurs on the reflected light, dispersion is generated. Dispersion compensation may be performed on the transmission signal with the wavelength λ1 by using the dispersion, and then the transmission signal is output to an output end OUT of the first waveguide 201. Similarly, after a transmission signal with a wavelength λ2 (an optical mode field being in TE0) enters the optical waveguide device through the input end IN, the optical mode field TE0 input to the first waveguide 201 is perturbed by the fourth grating, resulting in reflection. Because in the extension direction of the first waveguide 201, the width of the first waveguide 201 presents chirp distribution, and/or the grating parameter of the first grating 202 presents chirp distribution, under reflection by a grating structure with an adequate length, reflected light in a TE1 mode is generated in the first waveguide 201. Because a delay response that varies with a wavelength occurs on the reflected light, dispersion is generated. Dispersion compensation may be performed on the transmission signal with the wavelength λ2 by using the dispersion, and then the transmission signal is output to the output end OUT of the first waveguide 201. After a transmission signal with a wavelength λ3 (an optical mode field being in TE0) enters the optical waveguide device through the input end IN, the optical mode field TE0 input to the first waveguide 201 is perturbed by the fifth grating, resulting in reflection. Because in the extension direction of the first waveguide 201, the width of the first waveguide 201 presents chirp distribution, and/or the grating parameter of the first grating 202 presents chirp distribution, under reflection by a grating structure with an adequate length, reflected light in a TE1 mode is generated in the first waveguide 201. Because a delay response that varies with a wavelength occurs on the reflected light, dispersion is generated. Dispersion compensation may be performed on the transmission signal with the wavelength λ3 by using the dispersion, and then the transmission signal is output to the output end OUT of the first waveguide 201. Similarly, after a transmission signal with a wavelength λ4 (an optical mode field being in TE0) enters the optical waveguide device through the input end IN, the optical mode field TE0 input to the first waveguide 201 is perturbed by the sixth grating, resulting in reflection. Because in the extension direction of the first waveguide 201, the width of the first waveguide 201 presents chirp distribution, and/or the grating parameter of the first grating 202 presents chirp distribution, under reflection by a grating structure with an adequate length, reflected light in a TE1 mode is generated in the first waveguide 201. Because a delay response that varies with a wavelength occurs on the reflected light, dispersion is generated. Dispersion compensation may be performed on the transmission signal with the wavelength λ4 by using the dispersion, and then the transmission signal is output to the output end OUT of the first waveguide 201. Therefore, when the transmission signals with the four wavelengths (λ1, λ2, λ3, and λ4) are input to the optical waveguide device, the optical waveguide device can perform dispersion compensation on the transmission signals with the four wavelengths by using four gratings disposed at different waveguide layers of a same waveguide.

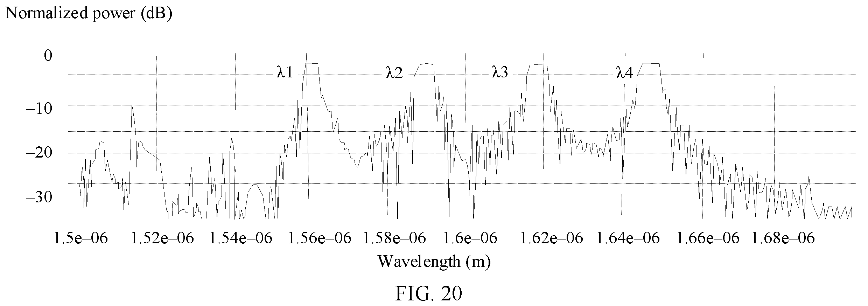

Based on the optical waveguide device shown in FIG. 17, FIG. 20 is a diagram of a normalized power response of reflected light. A horizontal coordinate is a wavelength (unit: meter, m), and a vertical coordinate is a normalized power (unit: dB). Specifically, when signals with wavelengths of λ1, λ2, λ3, and λ4 are input to a first waveguide 201, the signals are perturbed by four gratings, and signals with different wavelengths are all reflected. Because a delay response that varies with a wavelength occurs on the reflected light, dispersion is generated. Dispersion compensation may be separately performed on the transmission signals with the four wavelengths by using the dispersion, and then the transmission signals are output to an output end OUT of the first waveguide 201.

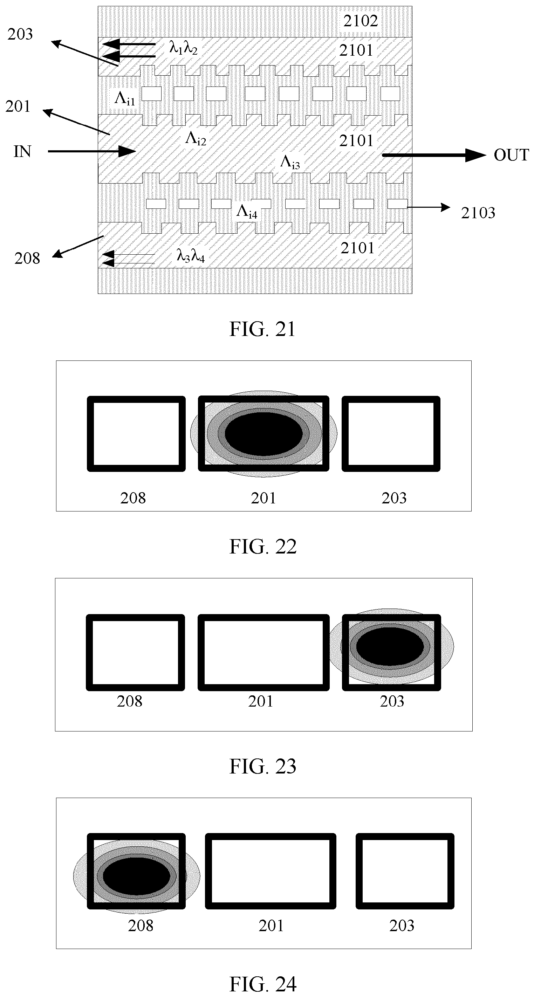

With reference to the foregoing examples, when the examples in FIG. 16 and FIG. 17 are combined, the first waveguide, the second waveguide, and the third waveguide may all be implemented by using a plurality of waveguide layers. For example, refer to FIG. 21. A first waveguide 201 includes a first waveguide layer and a second waveguide layer. A second waveguide 203 includes a third waveguide layer and a fourth waveguide layer. A third waveguide 208 includes a fifth waveguide layer and a sixth waveguide layer. The first waveguide layer, the third waveguide layer, and the fifth waveguide layer are disposed at a top silicon layer 2101. The second waveguide layer, the fourth waveguide layer, and the sixth waveguide layer are disposed at a first etching waveguide layer 2102 below the top silicon layer. An upper surface of the first etching waveguide layer is formed starting from a 1^{st} layer of silicon etching plane, and a lower surface of the first etching waveguide layer ends at a 2^{nd} layer of silicon etching plane. Specifically, for a structure of the first waveguide 201, refer to FIG. 15. Two gratings (where grating parameters of the two gratings are respectively Ai2 and Ai3) are disposed at the first waveguide layer. Two gratings (where grating parameters of the two gratings are respectively Λi1 and Ai4) are also disposed at the second waveguide layer. For a structure of the second waveguide 203, refer to FIG. 14. Two gratings (where grating parameters of the two gratings are respectively Λi1 and Ai2) are disposed at a same side of the third waveguide layer and the fourth waveguide layer. For a structure of the third waveguide 208, refer to FIG. 14. Two gratings (where grating parameters of the two gratings are respectively Ai3 and Ai4) are disposed at a same side of the fifth waveguide layer and the sixth waveguide layer.

FIG. 21 is a top view of a structure of an optical waveguide device. In a common SOI process, the top silicon layer 2101 has a height of 220 nm. Certainly, based on different wafer specifications, a thickness of the top silicon layer 2101 may be another optional value, for example, 340 nm. The first etching waveguide layer 2102 starts to be etched from the 1^{st} layer of silicon etching plane, to separately form structures of the second waveguide layer, the fourth waveguide layer, and the sixth waveguide layer. A thickness of the first etching waveguide layer 2102 is 70 nm, and the thickness of the first etching waveguide layer may be adjusted randomly, provided that the thickness is greater than 0 nm and less than the thickness of the top silicon layer 2101. The 2^{nd} layer of silicon etching plane 2103 starts from a second etching waveguide layer, and has a thickness of 0 nm. Therefore, when optical transmission signals are input from an intermediate waveguide (that is, the first waveguide 201) in a TE0 mode, optical mode fields are perturbed by gratings with four different grating parameters, signals with different wavelengths are all reflected. Because a delay response that varies with a wavelength occurs on reflected light, dispersion is generated. Dispersion compensation may be performed on the transmission signals with the four wavelengths by using the dispersion, and then the transmission signals are output to an output end OUT of the first waveguide 201.

For example, refer to FIG. 22. When a transmission signal in the intermediate waveguide (that is, the first waveguide 201) has an optical mode field in TE0, a refractive index of corresponding waveguide material is 2.8. Refer to FIG. 23. When a transmission signal in a right waveguide (that is, the second waveguide 203) has an optical mode field in TE1, a refractive index of corresponding waveguide material is 2.7. Refer to FIG. 24. When a transmission signal in a left waveguide (that is, the third waveguide 208) has an optical mode field in TE2, a refractive index of corresponding waveguide material is 2.6. It can be learned that when transmission signals are transmitted in different optical waveguides, because refractive indexes of waveguide material are different, modes of optical mode fields of the corresponding transmission signals are also different.

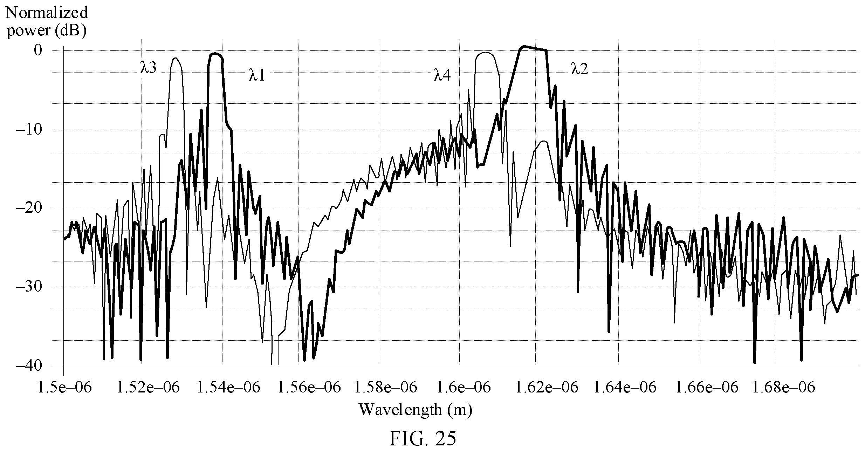

FIG. 25 is a diagram of a normalized power response of reflected light. A horizontal coordinate is a wavelength (unit: meter, m), and a vertical coordinate is a normalized power (unit: dB). With reference to the optical waveguide device shown in FIG. 21, when signals with wavelengths of λ1, λ2, λ3, and λ4 are input to the first waveguide 201, the signals are perturbed by four gratings. The signals with different wavelengths are all reflected. After the signals are reflected by a grating structure with an adequate length, reflected light in a TE1 mode is generated in the first waveguide 201. Because a delay response that varies with a wavelength occurs on the reflected light, dispersion is generated. The optical waveguide device may perform dispersion compensation on the transmission signals with the four wavelengths by using the dispersion, and then output the transmission signals to the output end OUT of the first waveguide 201.

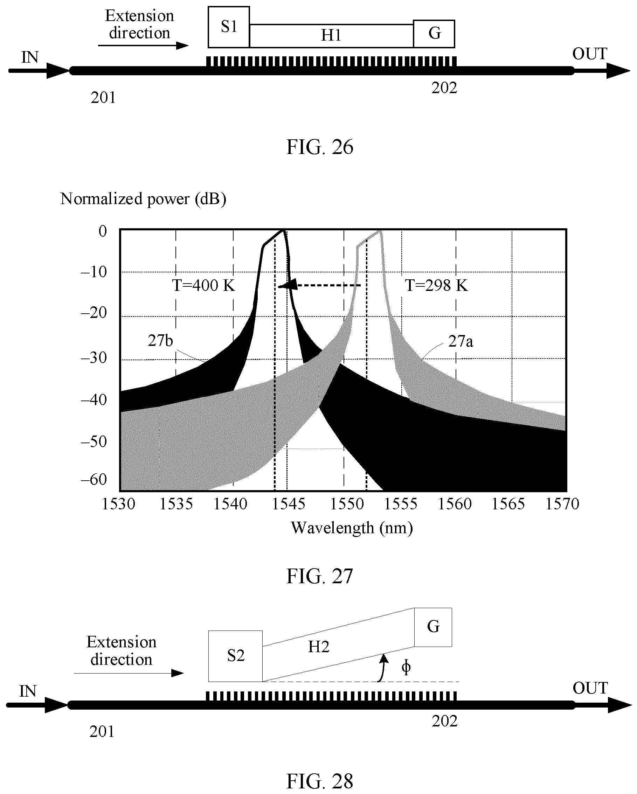

In addition, to avoid a shift that is of the center wavelength reflected by a grating and that is caused by ambient temperature, for example, with reference to FIG. 26, an embodiment of this application provides an optical waveguide device. In terms of structure, the optical waveguide device includes a first waveguide 201, a first grating 202, and a first heater electrode H1. H1 is disposed beside the first waveguide 201 in an extension direction of the first waveguide 201, and a distance between H1 and the first waveguide 201 is constant. The first heater electrode H1 has two ports respectively provided on two ends of the first heater electrode, a port G is grounded through a ground end, and the other port S1 is connected to a current input end.

Specifically, based on a phase matching relationship, a transmission signal is input from an input end IN of the first waveguide 201, and is reflected after being perturbed by the first grating 202. Because in the extension direction of the first waveguide 201, a width of the first waveguide 201 presents chirp distribution, and/or a grating parameter of the first grating 202 presents chirp distribution, under reflection by a grating structure with an adequate length, reflected light in a TE1 mode is generated in the first waveguide 201. Because a delay response that varies with a wavelength occurs on the reflected light, dispersion is generated. The optical waveguide device may perform dispersion compensation on the transmission signal by using the dispersion, and then output the transmission signal to an output end OUT of the first waveguide 201. When a current input through the current input end is used to heat the first heater electrode H1, because a thermo-optic effect exists in waveguide material for manufacturing the first waveguide and the first grating, a refractive index of the waveguide material changes (increases or decreases) with temperature. For example, when the temperature of the first heater electrode increases, the refractive index of the waveguide material decreases as the temperature increases. In this case, a center wavelength of a signal transmitted through the waveguide material decreases, so that the center wavelength reflected by the grating is finally regulated.

For example, refer to FIG. 27. An embodiment of this application provides a curve diagram of a center wavelength and a normalized power response of reflected light when temperature increases from 298 K to 400 K by using H1. A horizontal coordinate is a wavelength (unit: nm), and a vertical coordinate is a normalized power (unit: Ps). Specifically, the center wavelength of the reflected light corresponding to the initial temperature 298 K is 1552 nm (marked as a center wavelength of a curve 27a in FIG. 27). When a current input through a current input end is used to heat H1 to 400 K, a refractive index of a first waveguide 201 decreases as the temperature increases, so that the reflected center wavelength changes to 1544 nm (marked as a center wavelength of a curve 27b in FIG. 27). Therefore, it can indicate that the input current is used to heat H1, so that the optical waveguide device can regulate a center wavelength reflected by the grating.

It should be understood that, the above is only used as an example to describe regulation of H1 on the center wavelength reflected by the grating, and should not constitute a limitation on a structure of H1 or a structure (a quantity of optical waveguides, a quantity of disposed gratings, or the like) of the optical waveguide device.

For example, to adjust a grating parameter to adapt to errors of the grating parameter in different preparation processes, with reference to FIG. 28, an embodiment of this application provides an optical waveguide device. In terms of structure, the optical waveguide device includes a first waveguide 201, a first grating 202, and a second heater electrode H2. There is a predetermined included angle (marked as ϕ in FIG. 28) between an extension direction of H2 in an extension direction of the first waveguide 201 and an extension direction of the first waveguide 201. The second heater electrode H2 has two ports respectively provided on two ends of the second heater electrode, a port G is grounded through a ground end, and the other port S2 is connected to a current input end.

Specifically, based on a phase matching relationship, a transmission signal is input from an input end IN of the first waveguide 201, and is reflected after being perturbed by the first grating 202. Because in the extension direction of the first waveguide 201, a width of the first waveguide 201 presents chirp distribution, and/or a grating parameter of the first grating 202 presents chirp distribution, under reflection by a grating structure with an adequate length, reflected light in a TE1 mode is generated in the first waveguide 201. Because a delay response that varies with a wavelength occurs on the reflected light, dispersion is generated. The optical waveguide device may perform dispersion compensation on the transmission signal by using the dispersion, and then output the transmission signal to an output end OUT of the first waveguide 201. Because there is a predetermined included angle between the extension direction of H2 and the extension direction of the first waveguide 201, when a current input through the current input end is used to heat H2, temperature of the first waveguide 201 is in approximately linear temperature gradient distribution in the extension direction, to be specific, the temperature of the first waveguide 201 gradually decreases or increases in the extension direction (which depends on the included angle ϕ between the extension directions of H2 and the first waveguide). H2 causes a gradient change in a refractive index of entire waveguide material in the extension direction of the waveguide. This is equivalent to adjustment of a grating parameter. Therefore, regulation of a dispersion degree (which may be represented by a dispersion amount, and is in a unit of ps/nm) of a transmission signal reflected through perturbation of a grating is finally implemented.

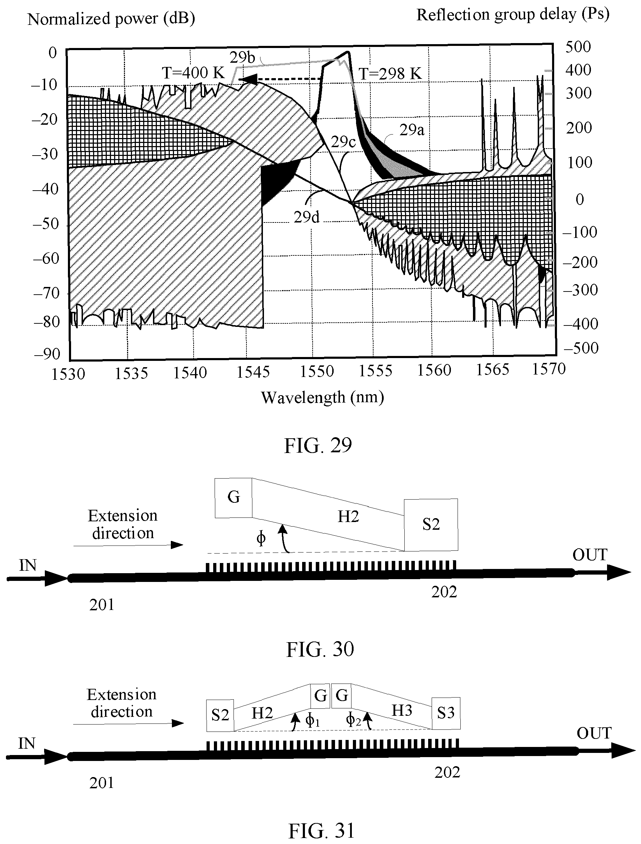

For example, refer to FIG. 28. The predetermined included angle ϕ between the extension directions of H2 and the first waveguide is an acute angle. Therefore, refer to FIG. 29. An embodiment of this application provides a curve diagram of a reflection group delay and a normalized power response of reflected light when temperature increases from 298 K to 400 K. A horizontal coordinate is a wavelength (unit: nm), a left vertical coordinate is a normalized power (unit: dB), and a right vertical coordinate is a group delay response (unit: Ps). A curve 29a is a normalized power distribution curve of the reflected light when the temperature is 298 K, a curve 29b is a normalized power distribution curve of the reflected light when the temperature is 400 K, a curve 29c is a group delay distribution curve of the reflected light when the temperature is 298 K, and a curve 29d is a group delay distribution curve of the reflected light when the temperature is 400 K. Specifically, the initial temperature 298K corresponds to a generated dispersion amount of -108 ps/nm (that is, a slope of the curve 29c in a reflection window of the curve 29a). When a current input through a current input end is used to heat H2 to 400 K, temperature of a first waveguide 201 forms an approximately linear temperature gradient in an extension direction, to be specific, the temperature gradually decreases in the extension direction, and a refractive index of the first waveguide 201 gradually decreases. Therefore, a dispersion amount generated for a reflected wavelength decreases to -21 ps/nm (that is, a slope of the curve 29d in a reflection window of the curve 29b). Therefore, it can indicate that after the input current is used to heat H2, the optical waveguide device can implement regulation on a dispersion degree (dispersion amount) of a transmission signal reflected through perturbation of a grating.

Optionally, with reference to FIG. 30, another possible structure of the optical waveguide device includes a third heater electrode H3, where a predetermined included angle ϕ between extension directions of the third heater electrode H3 and the first waveguide is an obtuse angle. Alternatively, based on FIG. 28 and FIG. 30, with reference to FIG. 31, another possible structure of the optical waveguide device may include a second heater electrode H2 (where a predetermined included angle ϕ1 is an acute angle) and a third heater electrode H3 (where a predetermined included angle ϕ2 is an obtuse angle).

It should be understood that, the above is only used as an example to describe regulation of H2 on a dispersion degree (dispersion amount) of a transmission signal reflected through perturbation of a grating, and should not constitute a limitation on a structure of H2 or a specific structure the optical waveguide device.

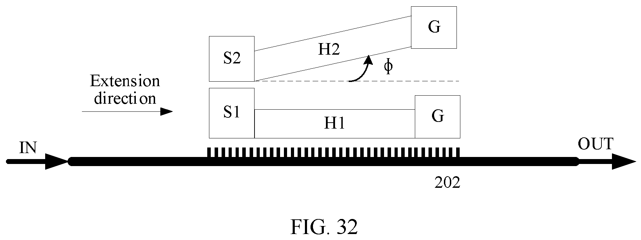

For example, FIG. 32 is a diagram of a structure of an optical waveguide device. Both a first heater electrode and a second heater electrode are disposed in the optical waveguide device. The optical waveguide device may include a first waveguide 201, a first grating 202, the first heater electrode H1, and the second heater electrode H2. H1 is disposed beside the first waveguide 201, and a distance between H1 and the first waveguide 201 is constant. There is a predetermined included angle (where in FIG. 32, the predetermined included angle is an acute angle) between extension directions of H2 and the first waveguide 201, and H2 is disposed at a specific distance above H1. The above is only used as an example to describe a possible structure of the optical waveguide device (where both the first heater electrode and the second heater electrode are disposed inside). In another possible optical waveguide structure, one port of H1 may be connected to one port of H2 (for example, H1 is connected to a port G of H2, that is, grounded through one port G). Therefore, the possible optical waveguide structure shown in FIG. 32 should not constitute a limitation on a position relationship, a connection relationship, and a setting manner between H1 and H2.

In another possible optical waveguide structure, with reference to FIG. 31 and FIG. 32, the optical waveguide device may include a first waveguide 201, a first grating 202, a first heater electrode H1, a second heater electrode H2, and a third heater electrode H3. H1 is disposed beside the first waveguide 201, and a distance between H1 and the first waveguide 201 is constant. There is a predetermined included angle (where the predetermined included angle is an acute angle) between extension directions of H2 and the first waveguide 201, and H2 is disposed at a specific distance above H1. There is a predetermined included angle (where the predetermined included angle is an obtuse angle) between extension directions of H3 and the first waveguide 201, and H3 is also disposed at a specific distance above H1.

In this way, the first heater electrode is disposed in the optical waveguide device to avoid a shift that is of a center wavelength reflected by a grating and that is caused by ambient temperature. The second heater electrode is disposed in the optical waveguide device to adjust a grating parameter to adapt to errors of the grating parameter in different preparation processes. In addition, two heater electrodes (the first heater electrode and the second heater electrode) may alternatively be disposed in one optical waveguide device, to avoid a shift that is of a center wavelength reflected by a grating and that is caused by ambient temperature and regulate a grating parameter to adapt to errors of the grating parameter in different preparation processes.

Based on the foregoing optical waveguide device architecture, an embodiment of this application provides an optical network. In terms of structure, the optical network includes a baseband unit BU, a radio unit RU, and a fiber connected between the BU and the RU, and further includes an optical waveguide device. The optical waveguide device is connected to an optical path between the BU and the AU. Optionally, the optical waveguide device may alternatively be integrated into an optical module of the BU or the AU, for example, may be integrated into a laser device, a modulator, or an optical detector of the optical module. Alternatively, the optical waveguide device may be disposed at a fiber, to form another possible optical network structure. For example, the optical network may be the optical network shown in FIG. 3. When a wavelength division multiplexing manner is used, the optical waveguide device may be integrated into an input end of a wavelength division demultiplexer component connected to a fiber (a wavelength division demultiplexer component connected to an AAU).

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example description of this application defined by the appended claims, and are considered as any of or all modifications, variations, combinations, or equivalents that cover the scope of this application. It is clear that a person skilled in the art can make various modifications and variations to this application without departing from the spirit and scope of this application. This application is intended to cover these modifications and variations of this application provided that these modifications and variations of this application fall within the scope of the claims of this application and their equivalent technologies.

## Claims

1. An optical waveguide device, comprising a first waveguide, wherein
the first waveguide comprises an input end and an output end;
a first grating is disposed between the input end and the output end of the first waveguide; the first grating comprises a plurality of grating combs periodically distributed in an extension direction of the first waveguide; and
in the extension direction of the first waveguide, a width of the first waveguide presents chirp distribution, and/or a grating parameter of the first grating presents chirp distribution, wherein the grating parameter comprises one or more of the following: a periodicity of the grating comb and a size of the grating comb.

2. The optical waveguide device according to claim 1, further comprising a second waveguide, wherein
the second waveguide and the first waveguide have a coupling region;
the first grating is distributed in the coupling region;
the second waveguide further comprises a second grating distributed in the coupling region;
the second grating comprises a plurality of grating combs periodically distributed in an extension direction of the second waveguide; and
in the extension direction of the second waveguide, a width of the second waveguide presents chirp distribution, and/or a grating parameter of the second grating presents chirp distribution, wherein the grating parameter of the second grating is the same as or different from the grating parameter of the first grating.

3. The optical waveguide device according to claim 1 or 2, wherein
a third grating is disposed between the input end and the output end of the first waveguide, and on a cross section perpendicular to the extension direction of the first waveguide, the first grating and the third grating are symmetrically distributed;
the third grating comprises a plurality of grating combs periodically distributed in the extension direction of the first waveguide; and
a grating parameter of the third grating is the same as or different from the grating parameter of the first grating.

4. The optical waveguide device according to claim 2, wherein the first waveguide and the second waveguide are made of a same layer of waveguide material.

5. The optical waveguide device according to claim 2, wherein the first waveguide and the second waveguide are respectively made of different layers of waveguide material.

6. The optical waveguide device according to claim 1, wherein the first waveguide comprises a first waveguide layer and a second waveguide layer that are disposed in a stacked manner;
the first grating is disposed at the first waveguide layer;
the first waveguide further comprises a fourth grating disposed at the second waveguide layer;
the fourth grating comprises a plurality of grating combs periodically distributed in the extension direction of the first waveguide;
a grating parameter of the fourth grating is the same as or different from the grating parameter of the first grating; and
in a direction perpendicular to the extension direction of the first waveguide and perpendicular to the first waveguide layer, the first grating and the fourth grating are distributed on a same side or different sides of the first waveguide.

7. The optical waveguide device according to claim 6, wherein
the first waveguide further comprises a fifth grating disposed at the first waveguide layer;
the fifth grating comprises a plurality of grating combs periodically distributed in the extension direction of the first waveguide;
a grating parameter of the fifth grating is the same as or different from the grating parameter of the first grating; and
in the direction perpendicular to the extension direction of the first waveguide and perpendicular to the first waveguide layer, the first grating and the fifth grating are respectively distributed on two sides of the first waveguide layer.

8. An optical waveguide device, comprising a first waveguide and a second waveguide, wherein
the first waveguide comprises an input end and an output end;
the first waveguide and the second waveguide have a coupling region distributed between the input end and the output end of the first waveguide;
the second waveguide comprises a second grating distributed in the coupling region;
the second grating comprises a plurality of grating combs periodically distributed in an extension direction of the second waveguide; and
in the extension direction of the second waveguide, a width of the second waveguide presents chirp distribution, and/or a grating parameter of the second grating presents chirp distribution, wherein the grating parameter comprises one or more of the following: a periodicity of the grating comb and a size of the grating comb.

9. The optical waveguide device according to any one of claims 1 to 8, comprising a first heater electrode, wherein
the first heater electrode is disposed beside the first waveguide in the extension direction of the first waveguide, and the first heater electrode is parallel to the first waveguide.

10. The optical waveguide device according to any one of claims 1 to 9, comprising a second heater electrode, wherein
there is a predetermined included angle between an extension direction of the second heater electrode and the extension direction of the first waveguide.

11. An optical network, comprising a baseband unit BU, a radio unit RU, and a fiber connected between the BU and the RU; and further comprising the optical waveguide device according to any one of claims 1 to 10, wherein the optical waveguide device is connected to an optical path between the BU and the RU, and
the optical waveguide device is integrated in an optical module of the BU or the RU, or the optical waveguide device is disposed on the fiber.
